(19) **Europäisches Patentamt**

**European Patent Office**

**Office européen des brevets**

(11) **EP 0 829 552 B1**

(12) **EUROPEAN PATENT SPECIFICATION**

(45) Date of publication and mention
of the grant of the patent:
**16.07.2003 Bulletin 2003/29**

(51) Int Cl.7: **C22F 1/04**, C22F 1/053,
C22C 21/10, B64C 3/00,
B64C 3/18

(21) Application number: **96306602.2**

(22) Date of filing: **11.09.1996**

(54) **Aluminium alloy products suited for commercial jet aircraft wing members**

Aluminiumlegierung für Verkehrsflugzeugflügel

Alliage d'aluminium pour les ailes des avions commerciaux

(84) Designated Contracting States:
**AT BE CH DE DK ES FI FR GB GR IE IT LI NL PT SE**

(43) Date of publication of application:
**18.03.1998 Bulletin 1998/12**

(73) Proprietor: **ALUMINUM COMPANY OF AMERICA**
**Alcoa Center, Pennsylvania 15069-0001 (US)**

(72) Inventors:
• **Miyasota, Shelly M.**
**Alcoa Center, Pennsylvania 15069-0001 (US)**
• **Bray, Gary H.**
**Alcoa Center, Pennsylvania 15069-0001 (US)**
• **Liu, John**
**Alcoa Center, Pennsylvania 15069-0001 (US)**
• **Staley, James T.**
**Alcoa Center, Pennsylvania 15069-0001 (US)**

(74) Representative:
**Ebner von Eschenbach, Jennifer et al**
**Ladas & Parry,**
**Dachauerstrasse 37**
**80335 München (DE)**

(56) References cited:
EP-A- 0 368 005      EP-A- 0 377 779
WO-A-80/00711        US-A- 4 828 631
US-A- 5 168 169      US-A- 5 277 719

• **CANADIAN INST. OF MINING, METALLURGY AND PETROLEUM, CONFERENCE: LIGHT METALS PROCESSING AND APPLICATIONS, QUEBEC CITY, CANADA., vol. 93, no. 11, 29 August 1993 - 1 September 1993, pages 629-642, XP000650973 STALEY, J.T. AND ROLF, R.L.: "Trends in alloys for aircraft"**

Remarks:
The file contains technical information submitted after the application was filed and not included in this specification

## Description

The invention pertains to an airplane wing comprising a lower wing skin comprising an aluminum alloy material and its manufacture.

There are numerous commercial jet aircraft of various sizes including the large "jumbo jet" aircraft, such as the Boeing 747 and the McDonnell Douglas MD11 and the Lockheed L1011. In going to a still larger aircraft, such as a 600-passenger aircraft envisioned for the future, the loads on the wing member needed to hold the airplane aloft are heightened some. These large aircraft will carry in the neighborhood of 600 passengers and may include two passenger decks. Whereas a Boeing 747 (one of the largest commercial jet aircraft in use) has an empty weight in the neighborhood of about 180 986 kg (399,000 pounds), it is estimated that the high capacity aircraft envisioned will weigh in the neighborhood of 241 315 kg (532,000 pounds) empty and somewhere around 544 320 kg (1,2000,000 pounds) loaded. High capacity aircraft as used herein refers to an aircraft weighing more than 204 120 kg (450,000 pounds) empty. To heighten efficiency in such an airplane, it would be important to have materials in the wing structures that can support the load of the airplane without themselves becoming too heavy. Aluminum alloys have seen wide use in airplane structural members, including airplane wing structural members, and have an enviable record for dependability and performance. More exotic, composite or other materials can be used for airplane wing-structural members, but are much more costly and can be somewhat less dependable than aluminum alloys.

In general, the structural core of a large airplane wing can include a box-like structure made up of an upper wing skin, a lower wing skin, and end pieces to close the box-like beam structure. While the upper and lower members are labeled "skin", it is important to appreciate that these are not thin skins such as on the airplane fuselage, but rather, somewhat thick, for instance 12.7mm (a half inch) or more in thickness. In most of the current commercial jet aircraft, the upper wing skin is made of a 7000 Series alloy, currently a 7X50 alloy (7X50 is intended to refer to 7050 and 7150), or more recent alloy 7055. U.S. Patent 3,881,966 describes 7X50 alloys and U.S. Reissue Patent 34,008 describes 7150 alloy used as an upper wing skin on a commercial jet aircraft, and U.S. Patent 5,221,377 describes alloy 7055 and refers to its use in airplane structural members. The upper wing skins were normally in artificially aged tempers such as T6-type or possibly T7-type tempers. U.S. Patents 4,863,528, 4,832,758 and 4,477,292, along with U.S. Patent 5,108,520, all describe tempers for 7000 type aluminum alloys, which said temper can be applied to the 7000 Series alloys just mentioned to improve performance.

In commercial jet aircraft, the lower wing skins have generally been made of aluminum alloy 2024 or similar products such as alloy 2324 which is included in U.S. Patent 4,294,625. The temper was normally T3-type such as T351 or T39. Temper and alloy designations used herein are generally those used in accordance with the Aluminum Association and are generally recognized in the art and described in the Aluminum Association Standards and Data book.

Both the upper and lower wing skins are often reinforced by stringer members which can have a channel or J-type shape or other shape which are riveted to the inside surfaces to stiffen the wing skins and thereby stiffen the wing box structure. In general, when a commercial jet aircraft is in flight, the upper wing skin is in compression, whereas the lower wing skin is in tension. An exception occurs when the airplane is on the ground where these stresses are reversed but at a much lower-level since at that point the wing outboard of the landing gear pretty much just holds up its own weight. Thus, the more important applications are when the airplane is in flight which places the upper wing skin in compression and the lower wing skin in tension. An exception occurs in certain military airplanes which are designed to utilize their enormous power to weight ratio and are intended to fly upside down, right side up, or any condition between at enormous speeds.

Because of the particular loading differences encountered in commercial jet airplanes, the alloy selections were, for the most part, as just described. There have been some exceptions in that airplanes such as the Lockheed L1011 included 7075-T76 lower wing skins and stringers and the military KC135 fueler airplane included 7178-T6 lower wing skins and stringers. Another military airplane, the C5A, used 7075-T6 lower wing skins that were integrally stiffened by machining out metal. Military fighter planes such as the F4, F5E, F8, F16 and F18 have included lower wing materials of 7075 alloy or related 7475 alloy (F16 and F18). Nonetheless, over the years the airplane wing box structure has, for the most part, in commercial jet aircraft included a 7000 Series alloy upper wing skin and a lower wing skin of 2000 Series alloy, namely, 2024 or a member of the 2X24 alloy family.

The important desired properties for a lower wing skin in a high capacity and new commercial passenger jet aircraft include a higher strength than 2X24 alloys, a better fatigue life and improved fracture toughness over 2X24 materials. Because the airplane flies at high altitude where it is cold, fracture toughness at -53.9°C (minus 65°F) has become a concern in new designs. Additional desirable features include age formability whereby the material can be shaped during artificial aging; together with good corrosion performance in the areas of stress corrosion cracking resistance and exfoliation corrosion resistance. Alloys used to date for lower wing skin members in commercial jet aircraft are all lacking in satisfying the needed levels for high capacity aircraft in one or more of these properties.

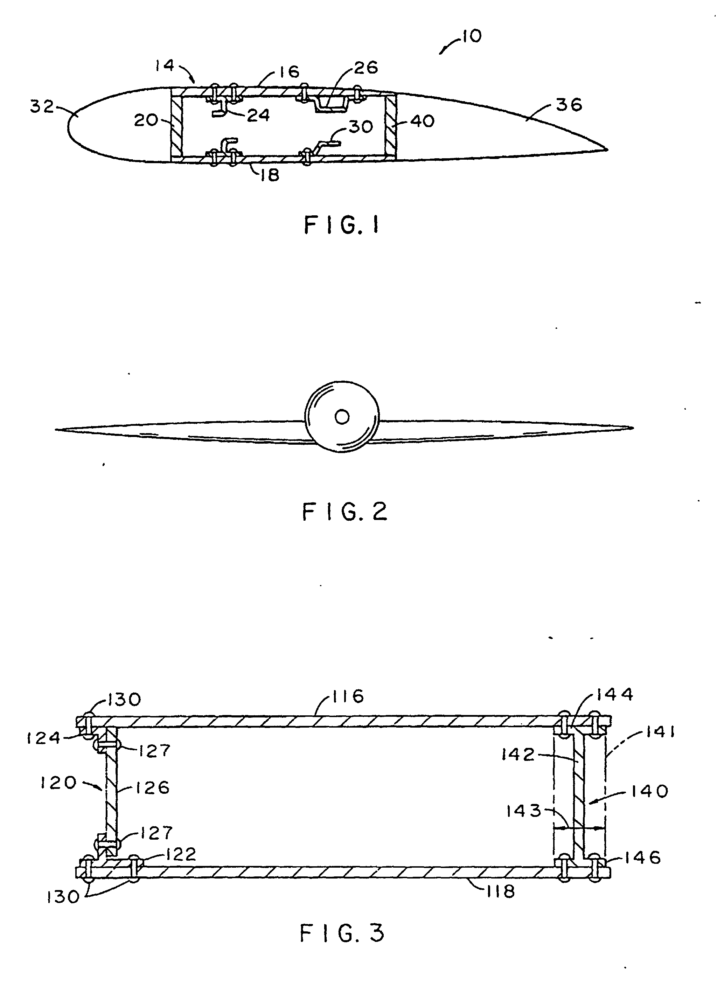

In the past, the wing box-like structure was often made from several pieces, as shown in Figure 3, left side, wherein the end member or spar comprised a plate fastened to the upper and lower wing skins by riveting to angle or tee-like members, in turn riveted to the wing skins. Some builders prefer to make the entire end piece or spar as shown on the right side of Figure 3 thus eliminating several rivets and considerable weight by reducing the amount of metal structure. This end piece or spar is made by machining from a thick plate but the plate needs good properties in the transverse directions as well as longitudinal direction.

EP-A-O 368 005 discloses an unrecrystallised thin gauge flat rolled aluminium alloy for use in aircraft load carrying components such as upper wings, the alloy comprising

.7-6.9 Zn,
.9-2.7 Mg,
.9-2.6 Cu,
.05-0.15 Zr,
max. 0.12 Si,
max. 0.15 Fe,
max. 0.10 Mn,
max. 0.06 Ti.

Also disclosed are alloys AA 7050 and AA 7150.

The alloy is cast, hot worked, solution heat treated, quenched and aged to give a substantially unrecrystallised structure.

US-A-4 828 631 discloses alloys for use in the aircraft industry containing 5.9 to 8.2 wt. % zinc, 1.5 to 4.0 wt. % magnesium, 1.5 to 3.0 wt. % copper, less than 0.01 wt. % boron not more than 0.04 wt. % chromium, and 0.5 wt. % maximum other alloying elements such as zirconium, manganese, iron, silicon and titanium, with the balance consisting of aluminum. Also disclosed is the alloy into a product of predetermined shape, solution heat treating the shaped product, quenching, and aging the heat treated and quenched product to a temperature of from above 270°F for a period of from 6 to 30 hours.

Staley, J.T. and Rolf, R.L., 'Trends in alloys for aircraft', Conference: Light Metals Processing and Applications, 29/8/93 - 1/9/93 discloses the use of alloys of the type 7XXX for aircraft components including skins, frames, and stringers for fuselages; leading edges, covers, spars, and stringers for upper and lower wings and empennages, as well as aluminium alloys used as lower wing skin structural members.

According to the present invention there is provided an airplane wing comprising a lower wing skin structural member comprising an alloy consisting of 5.9 to 6.7% zinc, 1.6 to 1.9% magnesium, 1.8 to 2.4% copper, 0.08 to about 0.15% zirconium, not more than 0.06% silicon, not more than 0.06% iron, not more than 0.11% iron plus silicon, the balance aluminum and unavoidable impurities.

Preferrably a lower wing skin for a commercial jet aircraft comprises a rolled plate. Composition percent is by weight unless indicated otherwise. This alloy in the form of rolled plates for lower wing skins or in the form of extrusions or rolled product for stringers incorporated into the lower wing structure, and particularly the combination of both, enables the production of an improved wing useful in a high capacity aircraft. Further, the same alloy can be used to machine long tapered spar members for the end pieces of the box-like wing structure from relatively thick plate. Preferred aspects of the lower wing skin as given in the dependent claims.

Figure 1 is an elevation in section of an airplane wing showing the box-like beam strength structure members in a schematic sense.

Figure 2 is an elevation view of an airplane viewed from the front schematically illustrating the wing and some curvature therefor in a somewhat exaggerated form.

Figure 3 is another elevation in section of the box-like wing beam structure showing different spar arrangements.

Figures 1, 2 and 3 are exaggerated in some respects for schematic, illustrative purposes.

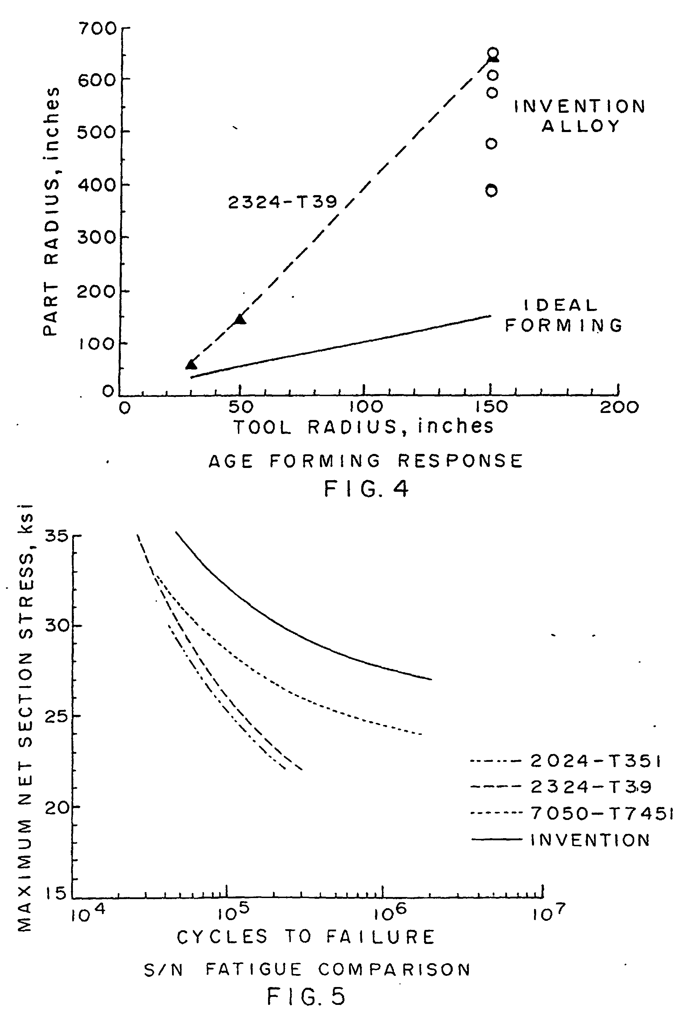

Figure 4 is a graph showing age forming response (part radius versus tool radius) for the invention and 2324-T39.

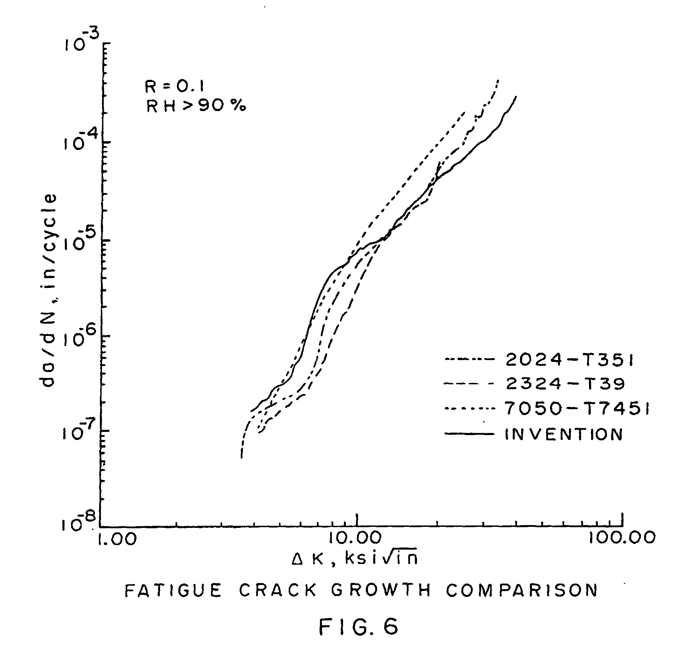

Figure 5 is a graph showing fatigue comparison (double open hole fatigue test).

Figure 6 is a graph showing fatigue crack growth rate comparison.

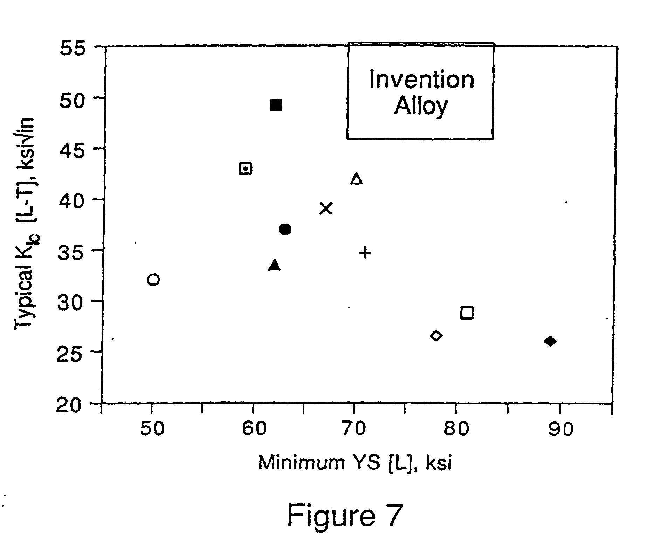

Figure 7 is a graph comparing typical toughness and minimum yield strength characteristics of the invention and several plate products.

In Figure 1 there is shown a rough schematic illustrating a large wing structure 10 including the box member 14 comprising an upper wing skin 16 and, spaced apart therefrom, a lower wing skin 18 and end members or spars 20 and 40 extending between the wing skin members 16 and 18 to close the box member. Included on the inside surfaces of the upper and lower wing skins are stringers 24, 26 and 30 riveted to the inside surfaces of the wing skins, there being different stringer shapes shown for purposes of illustration, it being remembered at all times that Figure 1 is a rough schematic and not a scale or detail of a commercial jet aircraft wing. Another approach is to use a thicker aluminum plate starting material and by removal of metal by machining develop stringers integral with the wing skin and eliminate the need for separate stringers and rivets. Thus, the wing skin and stiffener stringer sections can constitute an integrally stiffened panel made from relatively thick plate by operations comprising machining and possibly age forming or other shaping techniques. The connection between end members 20 and 40, on one hand, and the upper and lower wing skins, on the other hand, is just shown schematically, there being numerous ways to bridge or connect those members. Ahead of the forward box member 20 is the leading part of the wing 32 shown schematically and aft or to the rearward is the rear part of the wing 36, also shown schematically. Each part, the forward part and the aft part, can contain numerous control and other parts which can be attached to the box 14. In looking at the box section along various points of the wing length, it is significant that the thickness of the upper wing skin 16 and the lower wing skin 18 is diminished proceeding further outwardly from the fuselage. That is, the wing skins are thicker closer to the fuselage and thinner closer to the wing tip. In addition, as shown in Figure 2, the upper wing skin and lower wing skin converge toward the wing tip and can be curved going from the hull of the airplane out to the wing tip. This structure also enhances strength and illustrates some of the forming that is typically applied to the upper and lower wing skins such that performing this forming operation during artificial aging is a desirable feature if the alloy permits such, that is, if the alloy predictably and consistently responds in a repeatable way to attempt to age form it.

Referring to Figure 3, upper wing skin 116 and spaced apart lower wing skin 118 are connected or bridged by end member spars 120 and 140 to make a rigid box-like structure. One way to make an end member-skin connection is shown in the left-hand side of Figure 3 wherein plate-like member 126 is joined by rivets 127 to "L" section member 124 or "T" section member 122 which, in turn, are joined to the skin members by rivets 130. This arrangement is very effective but uses many rivets and adds weight over the more simple monolithic or integral spar member 140 shown on the right-hand side of Figure 3 which avoids the extra weight of the rivet site overlap between web plate 126 and members 124 and 122. The spar member 140 includes a web portion 142 and integral upper flange portion 144 and lower flange portion 146. Since the upper and lower wing skins 116 and 118 converge toward the wing tip, the vertical length of web portion 142 is greater close to the hull and considerably less near the wing tip and also, since that convergence can be curved, as shown in Figure 2, the height of web portion 142 can diminish in going toward the wing tip in a non-linear manner. The web 142 or either or both flange portions 144 or 146 can include thicker portions or boss portions for mounting attachments such as ancillary structures, hydraulic members or various other attachments. Integral spar member 140 can be machined or otherwise made or shaped (machining is currently used and is presently preferred) from a larger section of metal 141 (shown in phantom in Figure 3) and that metal 141 can be rolled plate that is thick enough to provide the upper and lower flange portions 144 and 146. That is, dimension 143 corresponds to the short transverse direction (across the thickness) of the rolled plate. That thickness typically can range from about 76 to 203 mm (3 inches to 8 inches) or possibly more, and typically is within 89 or 102 to 152 mm (3½ or 4 inches to 6 inches). For an integral spar 140, properties of concern include strength, both in compression for the upper wing skin region (when in flight), such as upper flange 144 portion, and in tension for the lower wing skin region (when in flight), such as lower flange 146 portion, together with toughness and corrosion resistance, for example, stress corrosion cracking resistance. In some aluminum alloys, toughness can be less in thicker sections (or metal machined from thick stock) than in metal rolled or worked into thinner stock, and it is desirable for an integral wing spar that good toughness be achieved in relatively thin sections such as web and flange portions 142 and 144 and 146 that are machined from thick stock 141. The flange portions of integral spar are riveted or connected to the spaced apart upper and lower wing skins and the spar bridges or connects across the distance the skins are spaced apart. This closes the box-like structure comprising the wing skins and spar members to provide a box-like beam structure to the wing.

In accordance with the invention, the upper wing skin may be made of the alloys described earlier for that purpose or other alloys. Preferably, the upper wing skin of the claimed airplane wing is made of alloy 7055 and consists of 7.6 to 8.4% zinc, 1.8 to 2.2% magnesium, 2.1 to 2.6% copper, and at least one element present in an amount not exceeding 0.5%, said element selected from Zr, V and Hf, the balance substantially aluminum and incidental elements and impurities.

Preferred embodiments are given in the dependent claims.

Further, it is preferred that the combined total volume percent of insoluble and soluble constituents is kept relatively low, for instance not over 1.5 vol.%, preferably not over 1 vol.%. Use of relatively high preheat or homogenization and solution heat treat temperatures considering the alloy content aid in this respect, although high temperatures can advise caution to avoid partial melting. Such cautions can include careful heat-up including slow or step-type heating, or both.

The invention alloy is preferably made into a product, suitably an ingot derived product, suitable for hot rolling. For instance, large ingots can be semicontinuously cast of the aforesaid composition and then can be scalped or machined to remove surface imperfections as needed or required to provide a good rolling surface. It is possible to cast an ingot of such quality surface that scalping or machining is not required, but in many cases it is preferred and recommended to scalp the ingot for hot rolling. The ingot may then be preheated to homogenize and solutionize its interior structure and a suitable preheat treatment is to heat to a relatively high temperature for this type of composition, such as 482°C (900°F). In doing so, it is preferred to heat to a first lesser temperature level such as heating above 427°C (800°F), for instance about 438°C (820°F) or above, or 454°C (850°F) or above, preferably 460°C (860°F) or more, for instance around 466°C (870°F) or more, and hold the ingot at about that temperature or temperatures for a significant time, for instance, 3 or 4 hours. Next the ingot is heated the rest of the way up to a temperature of around 477°C or 482°C (890°F or 900°F) or possibly more for another hold time of a few hours. It is preferred that homogenizing be conducted at cumulative hold times in the neighborhood of 4 to 20 hours or more, the homogenizing temperatures referring to temperatures above 438°C (820°F). That is, the cumulative hold time at temperatures above 438°C (820°F) should be at least 4 hours and preferably more, for instance 8 to 20 or 24 hours.

The ingot is then hot rolled and it is desirable to achieve an unrecrystallized grain structure in the rolled plate product. Hence, the ingot for hot rolling can exit the furnace at a temperature substantially above 454°C (850°F), for instance around 466°C or 468°C (870 or 875°F) or possibly more, and the rolling operation is carried out at temperatures above 413°C (775°F), or better yet, above 427°C (800°F), for instance around 432°C or 441°C (810 or 825°F). This increases the likelihood of avoiding recrystallization and it is also preferred in some situations to conduct the rolling without a reheating operation by using the power of the rolling mill and heat conservation during rolling to maintain the rolling temperature above a desired minimum, such as 399°C (750°F) or so. Hot rolling is continued, normally in a reversing hot rolling mill, until the desired thickness of the plate is achieved. The desired thicknesses for the hot rolled plate for lower wing skin metal are generally within around from about 8.9 or 10.2 or 11.4 or 12.7 to about 48.3 or 50.8 or 55.9 mm (0.35 or 0.4 or 0.45 or 0.5 to about 1.9 or 2 or 2.2 inches), preferably within around 22.9 or 25.4 to about 50.8 or 53.3 mm (0.9 or 1 to about 2 or 2.1 inches). Plate intended to be machined into integral spars such as 140 can range from about 25.4 or 50.8 mm to about 203 or 229 mm (1 or 2 inches to about 8 or 9 inche) or possibly more. This plate typically can range from around 50.8 to 101.6 mm (2 to 4 inches) thick for relatively smaller aircraft similar in size to Boeing 737, up to thicker plate of 101.6 or 127 to 203 mm (4 or 5 inches to 8 inches) or so thick. In addition to the preferred embodiments of the invention applied to lower wing skin and integral spars, other applications can include forgings and extrusions. In making extrusion, the alloy is extruded within around 316° to 399°C (600° to 750°F), for instance, at around 371°C (700°F), and preferably includes a reduction in cross-sectional area (extrusion ratio) of about 10:1. Forging can be used for parts such as wheels.

The hot rolled plate or other wrought product is solution heat treated (SHT) by heating to one or more temperatures within around 449° or 454°C to about 471° or 482°C (840 or 850°F to about 880 or 900°F) to take substantial portions, preferably all or substantially all, of the soluble zinc, magnesium and copper into solution, it being again understood that with physical processes which are not always perfect, probably every last vestige of these main alloying ingredients may not be fully dissolved during the SHT (solutionizing). After heating to the elevated temperature as just described, the product should be rapidly cooled or quenched to complete the solution heat treating procedure. Such cooling is typically accomplished preferably either by immersion in a suitably sized tank of cold water or by water sprays, although air chilling might be usable as supplementary or substitute cooling means for some cooling. After quenching, certain products may need to be cold worked, such as by stretching, so as to relieve internal stresses or straighten the product, even possibly in some cases, to further strengthen the plate product. For instance, the plate may be stretched 1 or 1½ or possibly 2% or 3% or more, or otherwise cold worked a generally equivalent amount. A solution heat treated (and quenched) product, with or without cold working, is then considered to be in a precipitation-hardenable condition, or ready for artificial aging according to preferred artificial aging methods as herein described or other artificial aging techniques. As used herein, the term "solution heat treat", unless indicated otherwise, shall be meant to include quenching.

After rapidly quenching, and cold working if desired, the plate product is artificially aged by heating to an appropriate temperature to improve strength and other properties. In one preferred thermal aging treatment, the precipitation hardenable plate alloy product is subjected to two main aging steps, phases or treatments, although clear lines of demarcation may not exist between each step or phase. It is generally known that ramping up to and/or down from a given or target treatment temperature, in itself, can produce precipitation (aging) effects which can, and often need to be, taken into account by integrating such ramping conditions and their precipitation hardening effects into the total aging treatment. Such integration was described in greater detail in U.S. Patent 3,645,804 to Ponchel. With ramping and its corresponding integration, two or three phases for thermally treating the plate product according to the aging practice may be effected in a single, programmable furnace. For convenience purposes, however, each stage (step or phase) will be more fully described as a distinct operation hereafter. It is believed that the first stage (lower temperature) serves to precipitation harden the alloy product and the second (higher temperature) stage uses one or more elevated temperatures for increasing the resistance to corrosion, such as exfoliation or stress corrosion cracking, and can still further strengthen the alloy. In a second preferred artificial aging treatment, a three-stage or step treatment can be employed wherein following the second higher temperature treatment a third treatment at one or more temperatures lower than the higher temperatures used in the second treatment are employed, and this stage can further increase the strength or other properties of the product. When three artificial aging phases are used, it is usually preferred to control the time for the second (higher) temperature phase so as to allow for further strengthening or beneficiation during the third or lower temperature treatment phase. The three-stage or phase temperature treatments are described in more detail in the aforesaid U.S. Patents 4,863,528, 4,832,758, 4,477,292 and 5,108,520. Still another artificial aging treatment could use a single principal aging stage such as heating to within about 132° or 138°C to about 149° or 154°C (about 270° or 280°F to around 300° or 310°F).

In some cases, two or three aging phases can be preferred. Some useful artificial aging treatments for practice of the invention include the following:

121°C(250°F) for 4 hrs + 163°C (325°F) for 4 hrs;
121°C(250°F) for 24 163°C hrs + 163°C (325°F) for 10 hrs;
135°C (275°F) for 3 hrs + 168°C (335°F) for 16 hrs.

In general, a two-stage artificial aging treatment would include a first stage at temperatures of from about 79 to 149°C (175 to 300°F) or less, preferably around 107 to 135°C or 138°C (225 to 275°F or 280°F), for an amount of time generally inverse to the temperature and ranging from about 1 or 2 hours for 149°C (300°F) and 30 or more hours for temperatures around 93°C (200°F) or less. A preferred treatment is at about 107 to 110°C to about 127 or 132°C (225 or 230°F to about 260 or 270°F) or possibly 135°C (275°F) for around 30 to 3 or 4 hours. A convenient treatment for this condition is 121°C (250°F) for 4 to 30 hours, preferably 8 to 24 hours. For a second higher temperature treatment, the temperature can range from about 149°C (300°F) or a little more to about 177°C (350°F) or perhaps a little higher to about 182 or 188°C (360 or 370°F) or even still higher to temperatures of about 204°C (400°F), although temperatures in the range of about 160 to about 177°C (320 to about 350°F) are preferred from the standpoint of controlling the process, with temperatures in the range of about 160° or 163°C to about 168 or 177°C (320 or 325°F to about 335 or 350°F) being more preferred.

Age forming promises a lower manufacturing cost while allowing more complex wing shapes to be formed. During age forming, the part is constrained in a die at an elevated temperature usually between about 121°C and about 204°C (250°F and about 400°F) for several to tens of hours, and desired contours are accomplished through stress relaxation. Especially during a higher temperature artificial aging treatment, such as a treatment above 160°C (320°F), the metal can be formed or deformed into a desired shape. In general, the deformations envisioned are relatively simple such as including a very mild curvature across the width of a plate member (such as wing skin members 18 or 16 in Figure 1) together with a mild curvature along the length of a plate such as 18 as is generally illustrated in somewhat exaggerated form in Figure 2 which shows a curvature along the length of the upper and lower wing surfaces. It can be desirable to achieve the formation of these mild curvature conditions during the artificial aging treatment, especially during the higher temperature artificial aging temperature. In general, the plate material is heated within around 149° to 204°C (300 to 400°F), for instance around 166° C (330°F), and typically can be placed upon a convex form and loaded by clamping or load application at opposite edges of the plate. The plate more or less assumes the contour of the form over a relatively brief period of time but upon cooling springs back a little when the force or load is removed. The expected springback is compensated for in designing the curvature or contour of the form which is slightly exaggerated with respect to the desired forming of the plate to compensate for springback. An artificial aging treatment step or procedure such as a low temperature aging at around 121°C (250°F) can follow age forming, if desired, or the age forming can be performed at a temperature such as 121°C (250°F) following aging at a higher temperature such as 166°C (330°F). Either before or after this age forming treatment, the plate member can be machined, for instance, such as by tapering the plate such that the portion intended to be closer to the fuselage is thicker and the portion closest to the wing tip is thinner. Additional machining or other shaping operations, if desired, can also be performed either before or after this age forming treatment. The high capacity aircraft may require a relatively thicker plate and a higher level of forming than previously used on a large scale.

The lower wing cover material for the last few generations of modern commercial jetliners has been generally from the 2X24 alloy family in the naturally aged tempers such as T351 or T39. One presently employed product is 2324-T39. In using these alloys, the thermal exposure during age forming needs to be minimized in order to retain the desirable material characteristics of the naturally aged tempers. The invention alloy is preferably in the artificially aged tempers, such as T6-type tempers or preferably T7-type tempers, such as T7651 or T7751. As such, the artificial aging treatment can be simultaneously accomplished during age forming without causing any degradation to its desirable properties.

Furthermore, the ability of the invention alloy to accomplish desired contours during age forming is either equal to or better than the currently used 2X24 alloys. This is illustrated by the results of an age formability response comparison test, which are presented in Figure 4 which shows a plot of part radius against tool radius.

If the age formed part conforms exactly to the shape of the die after the age forming cycle, i.e., if there is no "springback", the part radius would be equal to the tool radius. This condition is illustrated in Figure 4 by the solid line in the plot labeled as "ideal forming". Practically, there will normally be some finite amount of springback. The dashed line with filled triangles represents the age forming response of the 2324-T39 alloy showing the effect of springback. Plate of 2324-T39 is commercially used for lower wing skins and is recognized as a good basis of comparison. The 2324-T39 alloy was tested under a given set of conditions to minimize the effects of thermal exposure on its final material properties so as to preserve the desired characteristics of the T39 temper for this alloy, but this inherently adversely affects age forming. The invention alloy age formed during artificial aging treatments to produce the T7-type tempers is represented by the open circles. It shows equal or less springback, and therefore, better age formability than 2324-T39 for the limited conditions evaluated, and is capable of achieving the desired material properties.

Conforming to the above-identified limitations, including composition and correct processing enhances the production of plate stock having high yield strength together with very good levels of room temperature (RT) and cold temperature (CT) fracture toughness, as well as very good resistance to corrosion. The strength of plate produced in accordance with the invention is highly useful for lower wing skins. The longitudinal ultimate or tensile strength for sheet and thin plate [not over about 64mm (2½ inches) thick] is typically around 552 to 579 MPa (80 to 84 ksi) or more, and the minimum longitudinal ultimate or tensile strength can be specified at about 570, preferably 538, or more preferably 565 MPa (74, preferably 78, or more preferably 82 ksi) in stronger tempers. The typical long transverse ultimate strength is around 545 to 572 MPa (79 to 83 ksi) or more, and a minimum long transverse ultimate or tensile strength can be about 503 or 531 or more, or more preferably 552 or 559 MPa (73 or 77 or more, or more preferably 80 or 81 ksi). The tension yield strength in the longitudinal direction is typically around 503 or 510 to 538 or 552 MPa (73 or 74 to 78 or 80 ksi) and minimum longitudinal tension yield strength levels can be about 455 or 462 or 490 MPa (66 or 67 or 71 ksi), or more preferably 517 MPa (75 ksi). Long transverse tension yield strength is typically about 503 or 517 MPa (73 or 75 ksi) and minimum long transverse tension yield strength levels can be about 448 or 455 or 483 MPa (65 or 66 or 70 ksi), more preferably 503 or 510 MPa (73 or 74 ksi) in stronger tempers.

The different tempers resulting from different artificial aging treatments will impart different levels of strength and other performance characteristics, especially corrosion related properties, including stress corrosion cracking. T6 temper material which is aged at or around the so-called peak strength of an alloy exhibits high strength but can also exhibit corrosion resistance, including stress corrosion cracking resistance levels of less than some other tempers. T76 temper is often produced by artificially aging beyond a T6 level (relatively slight overaging) to produce a strength level that while less than T6 is somewhat comparable thereto, but T76 material has somewhat better corrosion resistance than T6-type tempers. T77 temper can be produced by the three-stage or three-phase treatments described earlier and has a strength level equivalent to or greater than 176 temper. T74 temper is artificially aged more than T76 or T77 and has a lower strength level but increased resistance to stress corrosion cracking. Hence, when talking about minimum strength levels, it is important to bear in mind that the temper influences the strength of a particular product in that overaged tempers typically have less strength than peak strength aged tempers but tend to compensate for the strength loss by having better corrosion resistance. In general, a T76 material will have a decrease from a T6 temper material of about 5% in strength, whereas a T74 or T73 material will respectively reflect decreases of about 7 and 10% from the T6 or peak strength condition. This is just a general guide and is not necessarily intended to be precise or definitive. Another aspect affecting strength is the thickness of the material in that as a general matter thicker material suffers a decrease in strength and toughness in comparison with a thinner material. For instance, comparing a plate of about 30.5 mm (1.2 inches) versus a plate of about 127mm (5 inches) may show a 28 MPa (4 ksi) reduction in yield strength for the 127mm (5-inch) plate and some toughness reduction such as about 5.5 MPa√m (5 ksi√inch).

When referring to a minimum (for instance, for strength or toughness), such can refer to a level at which specifications for purchasing or designating materials can be written or a level at which a material can be guaranteed or a level that an airframe builder (subject to safety factor) can rely on in design. In some cases, it can have a statistical basis wherein 99% of the product conforms or is expected to conform with 95% confidence using standard statistical methods.

Fracture toughness is an important property to airframe designers, particularly if good toughness can be combined with good strength. By way of comparison, the tensile strength, or ability to sustain load without fracturing, of a structural component under a tensile load can be defined as the load divided by the area of the smallest section of the component perpendicular to the tensile load (net section stress). For a simple, straight-sided structure, the strength of the section is readily related to the breaking or tensile strength of a smooth tensile coupon. This is how tension testing is done. However, for a structure containing a crack or crack-like defect, the strength of a structural component depends on the length of the crack, the geometry of the structural component, and a property of the material known as the fracture toughness. Fracture toughness can be thought of as the resistance of a material to the harmful or even catastrophic propagation of a crack under a load.

Fracture toughness can be measured in several ways. One way is to load in tension a test coupon containing a crack. The load required to fracture the test coupon divided by its net section area (the cross-sectional area less the area containing the crack) is known as the residual strength with units of MPa (ksi) (thousand pounds force per square inch). When the strength of the material as well as the specimen geometry are constant, the residual strength is a measure of the fracture toughness of the material. Because it is so dependent on strength and specimen geometry, residual strength is usually used as a measure of fracture toughness when other methods are not as useful as desired because of some constraint like size or shape of the available material. When the geometry of a structural component is such that it does not deform plastically through the thickness when a tension load is applied (plane-strain deformation), fracture toughness is often measured as plane-strain fracture toughness, $K_{Ic}$. This normally applies to relatively thick products or sections; for instance 15 or preferably 20 or 25 mm (0.6 or preferably 0.8 or 1 inch) or more. The ASTM has established a standard test using a fatigue pre-cracked compact tension specimen to measure $K_{Ic}$ which has the units MPa√m (ksi√in). This test is usually used to measure fracture toughness when the material is thick because it is believed to be independent of specimen geometry as long as appropriate standards for width, crack length and thickness are met. The symbol K, as used in $K_{Ic}$, is referred to as the stress intensity factor.

Structural components which deform by plane-strain are relatively thick as indicated above. Thinner structural components (less than 20 to 25mm [0.8 to 1 inch] thick) usually deform under plane stress or more usually under a mixed mode condition. Measuring fracture toughness under this condition can introduce variables because the number which results from the test depends to some extent on the geometry of the test coupon. One test method is to apply a continuously increasing load to a rectangular test coupon containing a crack. A plot of stress intensity versus crack extension known as an R-curve (crack resistance curve) can be obtained this way. The load at a particular amount of crack extension based on a 25% secant offset in the load vs. crack extension curve and the effective crack length at that load are used to calculate a measure of fracture toughness known as $K_{R25}$. At a 20% secant, it is known as $K_{R20}$. It also has the units of ksi√in. ASTM E561 (incorporated in its entirety herein by reference) concerns R-curve determination, and such is generally recognized in the art.

When the geometry of the alloy product or structural component is such that it permits deformation plastically through its thickness when a tension load is applied, fracture toughness is often measured as plane-stress fracture toughness which can be determined from a center cracked tension test. The fracture toughness measure uses the maximum load generated on a relatively thin, wide pre-cracked specimen. When the crack length at the maximum load is used to calculate the stress-intensity factor at that load, the stress-intensity factor is referred to as plane-stress fracture toughness $K_c$. When the stress-intensity factor is calculated using the crack length before the load is applied, however, the result of the calculation is known as the apparent fracture toughness, $K_{app}$, of the material. Because the crack length in the calculation of $K_c$ is usually longer, values for $K_c$ are usually higher than $K_{app}$ for a given material. Both of these measures of fracture toughness are expressed in the units ksi√in. For tough materials, the numerical values generated by such tests generally increase as the width of the specimen increases or its thickness decreases as is recognized in the art. Unless indicated otherwise herein, plane stress ($K_c$) values referred to herein refer to 406 mm (16-inch) wide test panels. Those skilled in the art recognize that test results can vary depending on the test panel width, and it is intended to encompass all such tests in referring to toughness. Hence, toughness substantially equivalent to or substantially corresponding to a minimum value for $K_c$ or $K_{app}$ in characterizing the invention products, while largely referring to a test with a 406 mm (16-inch) panel, is intended to embrace variations in $K_c$ or $K_{app}$ encountered in using different width panels as those skilled in the art will appreciate.

The temperature at which the toughness is measured can be significant. In high altitude flights, the temperature encountered is quite low, for instance, -53.9°C (minus 65°F), and for newer commercial jet aircraft projects, toughness at -53.9°C (minus 65°F) is a significant factor, it being desired that the lower wing material exhibit a toughness $K_{Ic}$ level of around 50 MPa√m (45 ksi√in) at minus 65°F or, in terms of $K_{R20}$, a level of 105 MPa√m (95 ksi√in), preferably 110 MPa√m (100 ksi√in) or more.

The toughness of the improved products according to the invention is very high and in some cases may allow the aircraft designer's focus for a material's durability and damage tolerance to emphasize fatigue resistance as well as notch toughness measurement. Resistance to cracking by fatigue is a very desirable property. The fatigue cracking referred to occurs as a result of repeated loading and unloading cycles, or cycling between a high and a low load such as when a wing moves up and down. This cycling in load can occur during flight due to gusts or other sudden changes in air pressure, or on the ground while the aircraft is taxing. Fatigue failures account for a large percentage of failures in aircraft components. These failures are insidious because they can occur under normal operating conditions without excessive overloads, and without warning. Crack evolution is accelerated because material inhomogeneities act as sites for initiation or facilitate linking of smaller cracks. Therefore, process or compositional changes which improve metal quality by reducing the severity or number of harmful inhomogeneities improve fatigue durability.

Stress life (S-N or S/N) fatigue tests characterize a material resistance to fatigue initiation and small crack growth which comprises a major portion of total fatigue life. Hence, improvements in S-N fatigue properties may enable a component to operate at higher stresses over its design life or operate at the same stress with increased lifetime. The former can translate into significant weight savings by downsizing, or manufacturing cost saving by component or structural simplification. while the latter can translate into fewer inspections and lower support costs. The loads during fatigue are below the static ultimate or tensile strength of the material measured in a tensile test and they are typically below the yield strength of the material. The fatigue initiation fatigue test is an important indicator for a buried or hidden structural member such as a wing spar which is not readily accessible for visual or other examination to look for cracks or crack starts. In this type of S-N fatigue testing at a net stress concentration factor $K_t$ of 2.5 using double open hole specimens (about 229 mm [9 inches] long by 25.4mm [1 inch] wide by 3.2mm [1/8 inch thick] with two holes 4.75 mm [0.187 inch] diameter along the length pulled axially) with a minimum/maximum stress ratio R of 0.1, the invention demonstrates a marked improvement over 2024-T351, 2324-T39 and 7050-T7451, as shown in Figure 5 which is an S-N fatigue comparison. Figure 5 shows that for a given stress level the invention allows for many more cycles and that for a desired number of cycles the invention allows for a higher stress than the other products shown.

If a crack or crack-like defect exists in a structure, repeated cyclic or fatigue loading can cause the crack to grow. This is referred to as fatigue-crack propagation. Propagation of a crack by fatigue may lead to a crack large enough to propagate catastrophically when the combination of crack size and loads are sufficient to exceed the material's fracture toughness. Thus, performance in the resistance of a material to crack propagation by fatigue offers substantial benefits to aerostructure longevity. The slower a crack propagates, the better. A rapidly propagating crack in an airplane structural member can lead to catastrophic failure without adequate time for detection, whereas a slowly propagating crack allows time for detection and corrective action or repair. Hence, a low fatigue crack growth rate is a desirable property.

The rate at which a crack in a material propagates during cyclic loading is influenced by the length of the crack. Another important factor is the difference between the maximum and the minimum loads between which the structure is cycled. One measurement including the effects of crack length and the difference between maximum and minimum loads is called the cyclic stress intensity factor range or $\Delta K$, having units of MPa√m (ksi√in), similar to the stress intensity factor used to measure fracture toughness. The stress intensity factor range ($\Delta K$) is the difference between the stress intensity factors at the maximum and minimum loads. Another measure affecting fatigue crack propagation is the ratio between the minimum and the maximum loads during cycling, and this is called the stress ratio and is denoted by R, a ratio of 0.1 meaning that the maximum load is 10 times the minimum load. The stress, or load, ratio may be positive or negative or zero. Fatigue crack growth rate testing is typically done in accordance with ASTM E647-88 (and others) well known in the art.

The fatigue crack propagation rate can be measured for a material using a test coupon containing a crack. One such test specimen or coupon is about 305 mm (12 inches) long by 102 mm (4 inches) wide having a notch in its center extending in a cross-wise direction (across the width; normal to the length). The notch is about 0.813 mm (0.032 inch) wide and about 5 mm (0.2 inch) long including a 60° bevel at each end of the slot. The test coupon is subjected to cyclic loading and the crack grows at the end(s) of the notch. After the crack reaches a predetermined length, the length of the crack is measured periodically. The crack growth rate can be calculated for a given increment of crack extension by. dividing the change in crack length (called $\Delta a$) by the number of loading cycles ($\Delta N$) which resulted in that amount of crack growth. The crack propagation rate is represented by $\Delta a/\Delta N$ or 'da/dN' and has units of 0.03937Xmm (inches)/cycle. The fatigue crack propagation rates of a material can be determined from a center cracked tension panel. In a comparison using R=0.1 tested at a relative humidity over 90% with $\Delta K$ ranging from around 4 to 20 or 30, the invention material exhibited relatively good resistance to fatigue crack growth, similar to 2024-T351,2324-T39 and 7050-T7451, as shown in Figure 6. However, the superior performance in S-N fatigue shown in Figure 5 makes the invention material much better suited for a buried or hidden member such as a wing spar.

The invention products exhibit very good corrosion resistance in addition to the very good strength and toughness and damage tolerance performance.

The exfoliation corrosion resistance for products in accordance with the invention can be EC or better ("or better" meaning EB or EA or N, that is, better performance in the test) in the EXCO test, typically EB or better, for test specimens taken at either mid-thickness (T/2) or one-tenth of the thickness from the surface (T/10) (T is thickness) or both. EXCO testing is known in the art and is described in ASTM G34. An EXCO rating of "EC" is considered good corrosion resistance in that it is considered acceptable for some commercial aircraft: "EB" is still better.

Stress corrosion cracking resistance across the short transverse direction is often considered an important property especially in relatively thick members. The stress corrosion cracking resistance for products in accordance with the invention in the short transverse direction can be equivalent to that needed to pass a C-ring or 3.2 mm (1/8-inch) round bar alternate immersion test for 20 days at 172 or 207 MPa (25 or 30 ksi) or more, using test procedures in accordance with ASTM G47 (including ASTM G44 and G38 for C-ring specimens and G49 for 3.2 mm [1/8-inch] bars), said ASTM G47, G44, G49 and G38 all known in the art.

As a general indicator of exfoliation corrosion and stress corrosion resistance, the plate typically can have an electrical conductivity of 35 or 40, or preferably 40% or more of the International Annealed Copper Standard (IACS).

Thus, the good exfoliation corrosion resistance of the invention is evidenced by an EXCO rating of "EC" or better, but in some cases other measures of corrosion resistance may be specified or required by airframe builders, such as stress corrosion cracking resistance or electrical conductivity. Satisfying any one or more of these specifications is considered good corrosion resistance.

Table 1 below lists minimum property levels for different product forms of the invention. UTS refers to ultimate or tensile strength; YS is yield strength; and K refers to toughness. S/N refers to fatigue performance. SCC is stress corrosion cracking stress. In general, but not necessarily in limitation, especially for thick plate, the lower values for strength can correspond more to lower strength tempers such as T74 (especially for plate) whereas higher minimum strength can correspond more to stronger tempers such as T77 or T6 type tempers, although higher levels are also generally more preferred than lower levels for any temper. In the case of toughness and fatigue, higher numbers generally simply designate preferred levels, although in any specific product a higher strength level can be accompanied by a lower toughness level than a lower strength product. In Table 1, property direction is in accordance with convention (e.g. L=longitudinal: LT=long transverse, and so on). Fracture toughness is tested at both 24°C (75°F) and -53.9°C (minus 65°F) in referring to room temperature (RT), such encompasses temperatures associated with ordinary room temperature (for example, temperatures such as around 21 to 27°C [70° to 80°F], typically around 24°C [75°F]).

EP 0 829 552 B1

# Table 1

## Minimum Property Levels

| | Sheet | Thin Plate <2.5" | Thick Plate 2.5-6" | Really Thick Plate >6" | Extrusions | Die Forging | Hand Forging |
|---|---|---|---|---|---|---|---|
| UTS, MPax.145 (ksi) | | | | | | | |
| L | 73,77,81 | 74,78,82 | 69,74,79 | 66,70,74 | 75,79,83 | 70,74,78 | 68,72,76 |
| LT | 73,77,81 | 73,77,81 | 68,73,78 | 65,69,73 | 73,77,81 | | 66,70,74 |
| ST | | | 60,66,72 | 59,63,67 | | 65,69,73 | 59,63,67 |
| YS, MPax.145 (ksi) | | | | | | | |
| L | 68,72,76 | 67,71,75 | 63,68,73 | 60,64,68 | 69,73,77 | 61,65,69 | 62,66,70 |
| LT | 68,72,76 | 66,70,74 | 62,67,72 | 59,63,67 | 67,71,75 | | 59,63,67 |
| ST | | | 57,61,65 | 54,58,62 | | 54,58,62 | 54,58,62 |
| Elong. % | | | | | | | |
| L | 7,8,9 | 8,9,10 | 8,9,10 | 6,7,8 | 6,7,8 | | 9,10,11 |
| LT | 6,7,8 | | 7 | 6 | | | 4 |
| ST | | | 1.5 | 1 | | | 3 |
| $K_K$, MPa$\sqrt{m}$x.0.91(ksi$\sqrt{in}$) | | | | | | | |
| L-T, 75° | | 39,42,45 | 31,34,37 | 23,26,29 | 42,45,48 | 31,34,37 | 31,34,37 |
| L-T, -65° | | 34,37,40 | 26,29,32 | 18,21,24 | 37,40,43 | 26,29,32 | 26,29,32 |
| T-L, 75° | | 30,33,36 | 24,27,30 | 17,20,23 | 29,32,35 | 20,23,26 | 24,27,30 |
| T-L, -65° | | 27,30,33 | 21,24,27 | 14,17,20 | 26,29,32 | 17,20,23 | 21,24,27 |
| $K_c$, MPa$\sqrt{m}$x.0.91(ksi$\sqrt{in}$) | | | | | | | |
| L-T, 75° | 120,145,170 | 125,150,175 | | | | | |
| L-T, -65° | 115,135,160 | 115,140,165 | | | | | |
| T-L, 75° | 95,120,145 | 75,100,125 | | | | | |
| T-L, -65° | 90,115,135 | 65,90,115 | | | | | |
| S/N, $K_t$=2.5 | | | | | | | |
| $S$, atMPax.145(ksi)N=$10^5$ | 28,30,32 | 28,30,32 | 26,28,30 | 20,22,24 | 28,30,32 | 28,30,32 | 28,30,32 |

The invention has been described in terms of plate which is preferred, but it is believed that other product forms may be able to enjoy the benefits of the invention and Table 1 refers to minimum property levels for extrusions and forgings,

To this point, the emphasis has been on rolled plate products for die wing skin of a large airplane, a wing skin being typically 6.35 to 38.1 mm (1/4 to 1½ inches) thick from one end to another, the production of which would start with an aluminum alloy plate having a length of 30 to 45 m (100 to 150 feet), a width of 203 to 305 (80 to 120 inches), and a thickness of about 19 to 45 mm (3/4 to 1-3/4) inches. It can be seen (referring again to Figure 1) that the wing lower skin can be stiffened by stiffener-type stringers which can be J-shaped, such as stringer 25, or Z- or S-shaped, like stringer 30, or it can be a hat-shaped channel, such as 26 shown in Figure 1 for the upper wing skin, or any other shape that can be attached to the wing skin 18 and reinforce its stiffness while not adding a lot of weight While in some cases it is preferred for manufacturing economies to separately fasten stringers such as those shown in Figure 1, such can be machined from a much thicker plate by the removal of the metal between the stiffener geometries, leaving only the stiffener shapes integral with the main wing skin thickness 18, thus eliminating all the rivets. Also the invention has been described in terms of thick plate for machining wing spar members as explained above, the spar member generally corresponding in length to the wing skin material.

Example 1

Ingots about 40 to 127 cm (16 inches by 50 inches) in cross section having the following compositions were cast:

Table 2

| Compositions | | | | | | | |
|---|---|---|---|---|---|---|---|
| Alloy | Si(%) | Fe(%) | Cu(%) | Mg(%) | Cr(%) | Zn(%) | Zr(%) |
| Alloy A (Invention) | 0.03 | 0.03 | 1.96 | 1.72 | -- | 6.37 | 0.11 |
| Alloy B | 0.04 | 0.03 | 1.97 | 2.48 | -- | 6.58 | 0.11 |
| 7050 | 0.12 | 0.15 | 2.2 | 2.2 | 0.04 | 6.1 | within 0.08-0.15 |

The ingots were scalped for hot rolling and then preheated to homogenize the metal and prepare it for hot rolling. The homogenization included heating to about 471°C (880°F) for a little over 4 hours followed by slowly heating up to a temperature of about 482°C (900°F) holding at 482°C (900°F) for a little over 24 hours. The plate was hot rolled at relatively high temperatures to produce plate about 30.5 mm (1.2 inches) thick. The high rolling temperatures favor an unrecrystallized condition in the plate after subsequent heat treatment. During plastic deformation, such as rolling, some energy is stored in the deformed metal. Nucleation and growth of new grains may take place during the hot rolling process or during subsequent annealing (or during solution heat treating) at the expense of the deformed matrix. These nuclei are strain-free and are completely or partially surrounded by high-angle grain boundaries. They can grow by the migration of their boundaries into the deformed matrix. If they consume the deformed matrix completely, the metal is said to have been 100% recrystallized, and the grain boundaries in the product usually possess high angle characteristics. On the other hand, if the growth of the new grains is completely inhibited during annealing, the material is said to be 100% unrecrystallized.

By "unrecrystallized" used herein, such means that the plate is preferably 85 to 100% unrecrystallized, or at least 60% of the entire thickness of the plate product is unrecrystallized.

The desirable "unrecrystallized" grain structure is promoted by minimizing the stored energy of deformation through use of high hot rolling temperature, preferably above 413°C (775°F) or 427°C (800°F). Further, the homogenization treatment described earlier also is designed to cause the precipitation of a fine distribution of dispersoids of $ZrAl_3$. These dispersoids pin the migrating grain boundaries during annealing or solution heat treating, and help promote an unrecrystallized grain structure. The plate is then solution heat treated to about 482°C (900°F) for about one hour, after which the hot plate is immersed in cold water quenching. The plate was stretched approximately 2% to relieve internal stress and quench distortion and then artificially aged. The artificial aging treatments employed and the properties measured are indicated in Table 3 below where the superiority of the invention in toughness and strength-toughness property combination along with notched (double open hole) fatigue performance is readily apparent.

Table 3

| Properties | | | | |
|---|---|---|---|---|
| Composition Age Treatment | Alloy A 24h/250°+10h/ 325° | Alloy B | | 7050 T7651 |
| | | 24h/250°+10h/ 325° | 24h/250°+20h/ 325° | |
| Strength L orientation | | | | |
| YS, (ksi) MPa<br>UTS, (ksi) MPa<br>Elong, % | (76.2) 525<br>(82.1) 566<br>13.6 | (82.3) 568<br>(88.5) 610<br>11.8 | (73.8) 509<br>(81.8) 564<br>14.0 | (70) 483<br>(78) 538<br>-- |
| Strength LT orientation | | | | |
| YS, (ksi) MPa<br>UTS, (ksi) MPa<br>Elong, % | (75.4) 520<br>(81.4) 561<br>13.0 | (82.1) 566<br>(88.6) 611<br>11.0 | | (69) 476<br>(78) 538<br>-- |
| Toughness KIc, (ksi√in) | | | | |
| L-T at (75°F) 24°C<br>L-T at (-65°F) -53.9°C<br>T-L at (75°F) 24°C | (47.5)<br>(42.0)<br>(40.7) | (26.2)<br><br>(24.0) | (33.3)<br>(26.9) | (31)<br><br>(28) |
| Toughness Kc,(ksi√in) | | | | |
| L-T at (75°F) 24°C<br>L-T at (-65°F) -53.9°C<br>T-L at (75°F) 24°C<br>T-L at (-65°F) -53.9°C | (172.9) 190.2<br>(166.4) 183.0<br>(123.9) 136.3<br>(79.8) 87.8 | | (126.6) 139.3<br>(99.3) 109.2 | |
| Fatigue S/N, $K_t$=2.5 | | | | |
| N at S=(29 ksi) 200 MPa<br>N at S=(31 ksi) 214 MPa<br>N at S=(33 ksi) 228 MPa | 565.000<br>226.000<br>70.700 | | <br>88,400 | 145.708 |

The aluminium alloy claimed is considered superior when used as a lower wing skin to several alloy-temper combinations including several currently considered useful in structural parts for commercial jet aircraft. Figure 7 is a graph showing the performance of the invention plate (one inch thick) in terms of minimum tension yield strength versus typical fracture toughness (L-T direction) $K_{lc}$ in comparison with several other commercial one-inch thick aluminum plate products. The following Table 4 correlates the point designations in Figure 7 with the commercial products they designate.

Table 4

| Plate Product | Symbols in Figure 7 | |
|---|---|---|
| 2024-T351<br>2324-T39<br>7150-T6151 | ○<br>●<br>□ | white circle<br>black circle<br>white square |
| 7150-T7751<br>7050-T7451<br>7050-T7651 | ◊<br>X<br>+ | white diamond<br>"X"<br>plus sign |

13

Table 4   (continued)

| Plate Product | Symbols in Figure 7 | |
|---|---|---|
| 7475-T651 | Δ | white triangle |
| 7475-T7651 | □ | white square with dot |
| 7475-T7351 | ■ | black square |
| 7055-T7751 | ♦ | black diamond |
| 7010-T7365 | ▲ | black triangle |

The large block for the invention in Figure 7 is intended to encompass several temper conditions resulting from different artificial aging treatments to produce different combinations of strength and toughness. As can be seen in Figure 7, the invention is superior in strength-toughness combinations.

In manufacturing the wing for high capacity and other commercial jet aircraft the plate members used for the upper and lower wing skins are hot rolled, solution heat treated and quenched. The plate is then cut or machined, or both, into a desired shape. Normally, wing skin is tapered to be thicker at the end closer to the fuselage than at the end further away from the fuselage, and that tapering is typically accomplished by machining. There is also often a slight bowing of the wing, as shown in Figure 2, which can be accomplished by machining or by age forming. The age forming can be carried out after the tapering operation, although it is possible to perform the tapering after an age forming operation which shapes the plate to conform to the desired profile. The plate is then artificially aged to a desired temper. As just stated, there can be some combination of forming and aging in this sequence of operations. The extruded or rolled stringers are then attached to the surfaces of the wing skin, specifically the inside surfaces that are not seen from the outside of the airplane. The stringers may be extruded or rolled or otherwise made into the elongate shapes as generally shown in Figure 1. If the wing skin plate is bowed, the stringers should also be bowed before joining to the plate. The stringers are affixed to the plate normally by mechanical fasteners, typically rivets. In accordance with the invention, for the lower wing skin, it is preferred that the plate be made from an alloy in accordance with the invention and that the lower wing skin stringers also be made with an alloy in accordance with the invention. The skins for the upper and lower wing box members are then assembled with the end pieces 20 and 40 in Figure 1 to make a box-like member as shown in Figure 1. In accordance with a preferred practice of the invention, one or both end members, or spars, are made or shaped, typically by operations comprising machining, from thick plate made in accordance with the invention and fastened to the upper and lower wing skin members, as shown in Figure 3, right side, to make the wing structure "box". A preferred embodiment includes making the upper wing skin member from an alloy containing about 7.6 to 8.4% zinc, about 1.8 to 2.2% magnesium, about 2.1 to 2.6% copper and one or more of Zr, V or Hf, present up to 0.5%, preferably Zr, and making one or more spar members in accordance with the invention. In this embodiment, the lower wing skin is also preferably in accordance with the invention but could be a quality 2XXX type alloy product if desired. Fuel tank or other provisions can be placed inside the wing member if it is a box-type member as shown in Figure 1.

It can be of advantage in some cases to clad plate or sheet in accordance with the invention to enhance some corrosion resistance aspects in accordance with principles recognized in the art.

While some emphasis is placed on high capacity airplanes, and lower wing skins for such, it is believed the invention also applies to other commercial airplanes as well.

Unless indicated otherwise, as used throughout this description of the invention, the following definitions shall apply:

a. The term "ksi" means kilopounds per square inch.
b. The term "minimum strength" or a minimum for another property or a maximum for a property shall mean the level at which 99% of the product is expected to conform with 95% confidence using standard statistical methods.
c. The term "ingot-derived" means solidified from liquid metal by a known or subsequently developed casting processes and includes, but is not limited to, direct chill (DC) continuous casting, electromagnetic continuous (EMC) casting, and variations thereof, as well as truly continuous slab and other casting techniques.
d. The term "7XXX" or "7000 Series" when referring to alloys shall mean structural aluminum alloys containing zinc as their alloying element present in the greatest weight percent as defined by the Aluminum Association.
e. The term "2XXX" or "2000 Series" when referring to alloys shall mean structural aluminum alloys containing copper as their alloying element present in the greatest weight percent as defined by the Aluminum Association .

In stating a numerical range or a minimum or a maximum for an element of a composition or a temperature, time or other process matter or a property or an extent of improvement or any other matter herein, and apart from and in

## EP 0 829 552 B1

addition to the customary rules for rounding off numbers, such is intended to specifically designate and disclose each number, including each fraction and/or decimal, (i) within and between the stated minimum and maximum for a range, or (ii) at and above a stated minimum, or (iii) at and below a stated maximum. For example, a range of 6 to 6.7% zinc expressly specifically discloses zinc contents of 6.1, 6.2, 6.3%...and so on, up to about 6.7% zinc. Similarly, herein disclosing artificial aging to one or more temperatures between about 148.9° and 204.4°C (300° and 400°F) specifically discloses 149.4°, 150°...157.2, 157.8°C (301°, 302°...315°, 316°F)....and so on, up to the stated maximum. Designating up to 0.06% or 0.06% maximum discloses 0.01, 0.02. . .---up to 0.06%.

## Claims

1. An airplane wing comprising a lower wing skin structural member comprising an alloy consisting of 5.9 to 6.7% zinc, 1.6 to 1.9% magnesium, 1.8 to 2.4% copper, 0.08 to 0.15% zirconium, not more than 0.06% silicon, not more than 0.06% iron, not more than 0.11% iron plus silicon, the balance aluminum and unavoidable impurities.

2. A wing according to claim 1, in which said lower wing skin structural member comprises rolled plate alloy.

3. A wing according to claim 1, wherein the wing also comprises an upper wing skin structural member comprising a hot rolled, solution heat treated and artificially aged alloy consisting of 7.6 to 8.4% zinc, 1.8 to 2.2% magnesium, 2.1 to 2.6% copper, and at least one element present in an amount not exceeding 0.5%, said element selected from zirconium, vanadium and hafnium, the balance aluminum and unavoidable impurities.

4. A wing according to claim 3, wherein the upper and lower wing skin structural members are connected by one or more spar members machined from rolled plate of an alloy as defined in claim 1.

5. A method of producing airplane lower wing skin structural members for a commercial jet aircraft comprising forming said member from an alloy consisting of 5.9 to 6.7% zinc, 1.6 to 1.9% magnesium, 1.8 to 2.4% copper, 0.08 to 0.15% zirconium, not more than 0.06% silicon, not more than 0.06% iron, not more than 0.11% iron plus silicon, the balance aluminum and unavoidable impurities.

6. A method according to claim 5, which comprises producing a lower wing skin structural member by providing a body of alloy as defined in claim 5;
   homogenizing said alloy by heating from 399° to 477°C (750 to 890°F) and further heating from 410° to 488°C (770°F to 910°F);
   hot rolling said alloy at temperature above 399°C (750°F);
   solution heat treating said alloy at a temperature of at least 471°C (880°F);
   quenching said alloy;
   stretching said alloy at least about 1%;
   artificially aging said alloy by heating from 79° to 143°C (175° to 290°F) and heating from 149° to 177°C (300° to 350°F).

7. A method according to claim 5, wherein an aluminum alloy plate member is made into a lower wing skin structural member, said method including shaping said plate member for said wing structural member and fastening thereto elongate stringers, and wherein said plate member and said stringer members comprise aluminum alloys wherein each such alloy is as defined in claim 5.

8. A method according to claim 5, of making wing structural members for a commercial aircraft wherein an upper wing skin member and a spaced apart therefrom lower wing skin member are arranged to cooperate in providing structural strength to said wing member and wherein at least said lower wing skin member has attached thereto elongate stringers, wherein the metal for said lower wing skin member is provided as a wrought aluminum mill rolled plate product comprising an aluminum alloy as defined in claim 5, and wherein the metal for said elongate stringer members is provided as a wrought aluminum mill product comprising an alloy as defined in claim 5.

9. A method according to claim 5, of producing a rolled plate for a wing spar structural member for a commercial jet aircraft comprising providing a body of alloy as defined in claim 5;
   homogenizing said alloy by heating from 399 to 477°C (750° to 890°F) and further heating from 410 to 488°C (770°F to 910°F);
   hot rolling said alloy at temperature above 399°C (750°F);

solution heat treating said alloy at a temperature of at least 471°C (880°F); quenching said alloy;
artificially aging said alloy by heating from 79° to 143°C (175° to 290°F) and heating from 149° to 177°C (300° to 400°F).

10. A method according to claim 5, wherein a thick aluminum alloy plate member is made into,a wing spar structural member, said method including shaping said plate member to a shape for said wing structural spar member, wherein said plate member comprises an aluminum alloy as defined in claim 5.

11. A method according to claim 6, which produces a hot rolled plate wherein said plate before or after any shaping has after artificial aging an L yield strength of at least 469 MPa (68 ksi), an LT yield strength of at least 462 MPa (67 ksi), an L-T fracture toughness $K_{Ic}$ at RT of at least 37.4 MPA $\sqrt{m}$ (34 ksi√in) and a -53.9°C (minus 65°F) L-T fracture toughness $K_{Ic}$ of at least 31.9 MPa $\sqrt{m}$ (29 ksi√in).

12. A method according to claim 7, wherein said plate before or after any shaping has after artificial aging an L yield strength of at least 490 MPA (71 ksi), an LT yield strength of at least 483 MPA (70 ksi), an L-T fracture toughness $K_{Ic}$ at RT of at least 46.2 MPA $\sqrt{m}$ (42 ksi√in) and a -53.9°C (minus 65°F) L-T fracture toughness $K_{Ic}$ of at least 40.7 MPA $\sqrt{m}$ (37 ksi√in).

13. A method according to claim 8, wherein said rolled plate product before or after any shaping has after artificial aging an L yield strength of at least 462 MPA (67 ksi), an LT yield strength of at least 455 MPA (66 ksi), an L-T fracture toughness $K_{Ic}$ at RT of at least 42.9 MPa $\sqrt{m}$ (39 ksi√n) and a -53.9° (minus 65°F) L-T fracture toughness $K_{Ic}$ of at least 37.4 MPA $\sqrt{m}$ (34 ksi√in).

14. A method according to claim 9, wherein said plate is at least 76 mm (3 inches) thick and before or after any shaping has after artificial aging an L yield strength of at least 441 MPA (64 ksi), an LT yield strength of at least 434 MPA (63 ksi), an L-T fracture toughness $K_{Ic}$ at RT of at least 28.6 MPA $\sqrt{m}$ (26 ksi√in) and a -53.9°C (minus 65°F) L-T fracture toughness $K_{Ic}$ of at least 23.1 MPA $\sqrt{m}$ (21 ksi√in).

15. A method according to claim 9, wherein said plate is at least 76 mm (3 inches) thick and before or after any shaping has after artificial aging an L yield strength of at least 414 MPA (60 ksi), an LT yield strength of at least 407 MPA (59 ksi), an L-T fracture toughness $K_{Ic}$ at RT of at least 25.3 MPA $\sqrt{m}$ (23 ksi√in) and a -53.9°C (minus 65°F) L-T fracture toughness $K_{Ic}$ of at least 19.8 MPA $\sqrt{m}$ (18 ksi√in).

16. A method according to claim 9, which includes an additional artificial aging heating from 79 to 143°C (175°F to 290°F) after said heating from 149 to 177°C (300°F to 400°F).

17. A method according to claim 10, wherein said plate is at least 64 mm (2 ½ inches) thick and before or after any shaping has after artificial aging an L yield strength of at least 469 MPA (68 ksi), an LT yield strength of at least 462 MPA (67 ksi), an L-T fracture toughness $K_{Ic}$ at RT of at least 37.4 MPA $\sqrt{m}$ (34 ksi√in), a -53.9°C (minus 65°F) L-T fracture toughness $K_{Ic}$ of at least 31.9 MPA $\sqrt{m}$ (29 ksi√in) and an SCC resistance of at least 172 MPA (25 ksi).

18. A method according to claim 7, wherein said plate before or after any shaping has after artificial aging an L yield strength of at least 490 MPA (71 ksi), an LT yield strength of at least 483 MPA (70 ksi), an L-T fracture toughness $K_{Ic}$ at RT of at least 42.9 MPA $\sqrt{m}$ (39 ksi√in), a -53.9°C (minus 65°F) L-T fracture toughness $K_{Ic}$ of at least 37.4 MPA $\sqrt{m}$ (34 ksi√in) and an SCC resistance of at least 172 MPA (25 ksi).

19. A method according to claim 7, wherein said plate as rolled is less than 64 mm (2½ inches) thick and before or after any shaping, has, after artificial aging, an L ultimate strength of at least 538 MPA (78 ksi), an LT ultimate strength of at least 531 MPA (77 ksi), an L-T fracture toughness $K_{Ic}$ at RT of at least 46.2 MPA $\sqrt{m}$ (42 ksi√in), an L-T fracture toughness $K_{Ic}$ at -53.9°C (minus 65°F) of at least 40.7 MPA $\sqrt{m}$ (37 ksi√in), a T-L fracture toughness $K_{Ic}$ at RT of at least 36.3 MPA $\sqrt{m}$ (33 ksi√in) and a T-L fracture toughness $K_{Ic}$ at -53.9°C (minus 65°F) of at least 33 MPA $\sqrt{m}$ (30 ksi√in).

20. A method according to claim 7, wherein said plate as rolled is less than 64 mm (2½ inches) thick and, before or after any shaping, has, after artificial aging, an L yield strength of at least 490 MPA $\sqrt{m}$ (71 ksi√in), an LT yield strength of at least 483 MPa (70 ksi), an L-T fracture toughness $K_{Ic}$ at RT of at least 42.9 MPA $\sqrt{m}$ (39 ksi√in), an L-T fracture toughness $K_{Ic}$ at -53.9°C (minus 65°F) of at least 37.4 MPA $\sqrt{m}$ (34 ksi√in), a T-L fracture toughness $K_{Ic}$ at RT of at least 33 MPA $\sqrt{m}$ (30 ksi√in) and a T-L fracture toughness $K_{Ic}$ at -53.9°C (minus 65°F) of at least 29.7 MPA $\sqrt{m}$ (27 ksi√in).

21. A method according to claim 7, wherein said plate as rolled is less than 64 mm (2½ inches) thick and, before or after any shaping, has, after artificial aging, an L yield strength of at least 462 MPa (67 ksi), an LT yield strength of at least 455 MPa (66 ksi), an L-T fracture toughness $K_{Ic}$ at RT of at least 137.5 MPa $\sqrt{m}$ (125 ksi√in), an L-T fracture toughness $K_{Ic}$ at -53.9°C (minus 65°F) of at least 126.5 MPa $\sqrt{m}$ (115 ksi√in), a T-L fracture toughness $K_{Ic}$ at RT of at least 82.5 MPA $\sqrt{m}$ (75 ksi√in) and a T-L fracture toughness $K_{Ic}$ at -53.9°C (minus 65°F) of at least 71.5 MPa $\sqrt{m}$ (65 ksi√in).

22. A method according to claim 10, wherein said plate as rolled is at least 64 mm (2½ inches) thick and, before or after any shaping, has, after artificial aging, an L yield strength of at least 469 MPa (68 ksi), an LT yield strength of at least 462 MPa (67 ksi), an ST yield strength of at least 421 MPa (61 ksi), an L-T fracture toughness $K_{Ic}$ at Rt of at least 34.1 MPA $\sqrt{m}$ (31 ksi√in), an L-T fracture toughness $K_{Ic}$ at -53.9°C (minus 65°F) of at least 28.6 MPA $\sqrt{m}$ (26 ksi/in), a T-L fracture toughness $K_{Ic}$ at RT of at least 26.4 MPA $\sqrt{m}$ (24 ksi√in) and a T-L fracture toughness $K_{Ic}$ at -53.9°C (minus 65°F) of at least 23.1 MPa $\sqrt{m}$ (21ksi√in).

23. A method according to claim 10, wherein said plate as rolled is at least 64 mm (2½ inches) thick and, before or after any shaping, has, after artificial aging, an L ultimate strength of at least 476 MPa (69 ksi), an LT ultimate strength of at least 469 MPa (68 ksi), an ST ultimate strength of at least 441 MPa (64 ksi), an L-T fracture toughness $K_{Ic}$ at RT of at least 37.4 MPA $\sqrt{m}$ (34 ksi√in), an L-T fracture toughness $K_{Ic}$ at -53.9°C (minus 65°F) of at least 31.9 MPA $\sqrt{m}$ (29 ksi√in), a T-L fracture toughness $K_{Ic}$ at RT of at least 29.7 MPA $\sqrt{m}$ (27 ksi√in) and a T-L fracture toughness $K_{Ic}$ at -53.9°C (minus 65°F) of at least 26.4 MPA $\sqrt{m}$ (24 ksi√in).

24. A method according to claim 10, wherein said plate as rolled is greater than 102 mm (4 inches) thick and, before or after any shaping, has, after artificial aging, an L yield strength of at least 414 MPa (60 ksi), an LT yield strength of at least 407 MPa (59 ksi), an ST yield strength of at least 372 MPa (54 ksi), an L-T fracture toughness $K_{Ic}$ at RT of at least 25.3 MPA $\sqrt{m}$ (23 ksi√in), an L-T fracture toughness $K_{Ic}$ at -53.9°C (minus 65°F) of at least 19.8 MPA $\sqrt{m}$ (18 ksi√in), a T-L fracture toughness $K_{Ic}$ at RT of at least 18.7 MPA $\sqrt{m}$ (17 ksi√in) and a T-L fracture toughness $K_{Ic}$ at -53.9° (minus 65°F) of at least 15.4 MPA $\sqrt{m}$ (14 ksi√in).

25. A method according to claim 5, comprising providing a body of alloy as defined in claim 5;
    homogenizing said alloy by heating from 399 to 477°C (750° to 890°F) and further heating from 410 to 488°C (770°F to 910°F);
    hot working said alloy;
    solution heat treating said alloy at a temperature of at least 471°C (880°F);
    quenching said alloy;
    artificially aging said alloy by heating from 79 to 143°C (175° to 290°F) and heating from 149 to 177°C (300° to 350°F).

26. A method according to claim 25, wherein said hot working is extrusion.

27. A method according to claim 25, wherein said hot working is forging.

28. A method according to claim 5, wherein an upper wing skin member and a spaced apart therefrom lower wing skin member are arranged to cooperate in providing structural strength to said wing member and wherein said upper and lower wing skin members are bridged by a spar member shaped from a rolled aluminum plate, wherein the metal for said rolled plate product is provided as an aluminum alloy as defined in claim 5.

29. A method according to claim 28, wherein said plate as rolled is at least 64mm (2½ inches) thick and, before or after any shaping, has, after artificial aging, an L yield strength of at least 469 MPa (68 ksi), an LT yield strength of at least 462 MPa (67 ksi), an L-T fracture toughness $K_{Ic}$ at RT of at least 34.1 MPA $\sqrt{m}$ (31 ksi√in), and an L-T fracture toughness $K_{Ic}$ at -53.9°C (minus 65°F) of at least 28.6 MPA $\sqrt{m}$ (26 ksi√in).

30. A method according to claim 28, wherein said plate as rolled is a least 64mm (2½ inches) thick and, before or after any shaping, has, after artificial aging, an L ultimate strength of at least 476 MPa (69 ksi), an LT ultimate strength of at least 469 MPa (68 ksi), an ST ultimate strength of at least 414 MPa (60 ksi), an L-T fracture toughness $K_{Ic}$ at RT of at least 37.4 MPA $\sqrt{m}$ (34 ksi√in), an L-T fracture toughness $K_{Ic}$ at -53.9°C (minus 65°F) of at least 31.9 MPA $\sqrt{m}$ (29 ksi√in), a T-L fracture toughness $K_{Ic}$ at RT of at least 29.7 MPA $\sqrt{m}$ (27 ksi√in) and a T-L fracture

toughness $K_{Ic}$ at -53.9°C (minus 65°F) of at least 26.4 MPA $\sqrt{m}$ (24 ksi√in).

**31.** A method according to claim 28, wherein said plate as rolled is greater than 102mm (4 inches) thick and, before or after any shaping, has, after artificial aging, an L yield strength of at least 428 MPa (62 ksi), an LT yield strength of at least 421 MPa (61 ksi), an ST yield strength of at least 372 MPa (54 ksi), an L-T fracture toughness $K_{Ic}$ at RT of at least 25.3 MPA $\sqrt{m}$ (23 ksi√n), an L-T fracture toughness $K_{Ic}$ at -53.9°C (minus 65°F) of at least 19.8 MPA $\sqrt{m}$ (18 ksi√in), a T-L fracture toughness $K_{Ic}$ at RT of at least 18.7 MPA $\sqrt{m}$ (17 ksi√in) and a T-L fracture toughness $K_{Ic}$ at -53.9°C (minus 65°F) of at least 15.4 MPA $\sqrt{m}$ (14 ksi√in).

**32.** A method according to claim 5, comprising providing a body of alloy as defined in claim 5;
homogenizing said alloy;
hot rolling said alloy into a plate;
solution heat treating the alloy;
quenching the alloy;
the plate being substantially unrecrystallized and having, after artificial aging, an L yield strength of at least 428 MPa (62 ksi), an LT yield strength of at least 421 MPa (61 ksi), an ST yield strength of at least 37.2 MPa (54 ksi), an L-T fracture toughness $K_{Ic}$ at RT of at least 25.3 MPa $\sqrt{m}$ (23 ksi√in), an L-T fracture toughness $K_{Ic}$ at -53.9°C (minus 65°F) of at least 19.8 MPA $\sqrt{m}$ (18 ksi√in), a T-L fracture toughness $K_{Ic}$ at RT of at least 18.7 MPA $\sqrt{m}$ (17 ksi√in) and a T-L fracture toughness $K_{Ic}$ at -53.9°C (minus 65°F) of at least 15.4 MPA $\sqrt{m}$ (14 ksi√in).

**33.** A method according to claim 5, wherein an aluminum alloy plate member is made into an aircraft structural member, said method including machining said plate member to a shape for said structural member, wherein said plate member comprises an aluminum alloy as defined in claim 5, said plate being substantially unrecrystallized.

**Patentansprüche**

**1.** Flugzeugflügel, aufweisend ein Konstruktionsteil für die untere Tragflächenhaut, die eine Legierung aufweist, bestehend aus 5,9 bis 6,7% Zink, 1,6 bis 1,9% Magnesium, 1,8 bis 2,4% Kupfer, 0,08 bis 0,15% Zirconium, nicht mehr als 0,06% Silicium, nicht mehr als 0,06% Eisen, nicht mehr als 0,11% Eisen plus Silicium, Rest Aluminium und unvermeidbare Verunreinigungen.

**2.** Flugzeugflügel nach Anspruch 1, bei welchem das Konstruktionsteil für die untere Tragflächenhaut eine gewalzte Blechlegierung aufweist.

**3.** Flugzeugflügel nach Anspruch 1, wobei der Flugzeugflügel ebenfalls ein Konstruktionsteil für die obere Tragflächenhaut aufweist, aufweisend eine warmgewalzte, durch Lösungsglühen behandelte und bei erhöhter Temperatur ausgehärtete Legierung, bestehend aus 7,6 bis 8,4% Zink, 1,8 bis 2,2% Magnesium, 2,1 bis 2,6% Kupfer und mindestens ein Element, das in einer Menge von nicht mehr als 0,5% vorliegt, wobei das Element ausgewählt ist aus Zirconium, Vanadium und Hafnium, Rest Aluminium und unvermeidbare Verunreinigungen.

**4.** Flugzeugflügel nach Anspruch 3, wobei die Konstruktionsteile der oberen und unteren Tragflächenhaut über ein oder mehrere Holmteile verbunden sind, die aus einem gewalzten Blech einer Legierung nach Anspruch 1 gefertigt sind.

**5.** Verfahren zum Herstellen von Konstruktionsteilen für die untere Flugzeug-Tragflächenhaut für einen kommerziellen Jet, umfassend das Formen des Teils aus einer Legierung, bestehend aus 5,9 bis 6,7% Zink, 1,6 bis 1,9% Magnesium, 1,8 bis 2,4% Kupfer, 0,08 bis 0,15% Zirconium, nicht mehr als 0,06% Silicium, nicht mehr als 0,06% Eisen, nicht mehr als 0,11% Eisen plus Silicium, Rest Aluminium und unvermeidbare Verunreinigungen.

**6.** Verfahren nach Anspruch 5, welches Verfahren das Herstellen eines Konstruktionsteils für eine untere Tragflächenhaut umfasst, indem ein Walzenballen einer Legierung nach Anspruch 5 bereitgestellt wird;
Homogenisieren der Legierung durch Erhitzen von 399° bis 477°C (750 bis 890°F) und weiteres Erhitzen von 410° bis 488°C (770° bis 910°F);
Warmwalzen der Legierung bei einer Temperatur oberhalb von 399°C (750°F);
Behandeln durch Lösungsglühen der Legierung bei einer Temperatur von mindestens 471°C (880°F);
Abschrecken der Legierung;
Streckziehen der Legierung um mindestens etwa 1%;

Aushärtung bei erhöhter Temperatur der Legierung durch Erhitzen von 79° bis 143°C (175° bis 290°F) und Erhitzen von 149° bis 177°C (300° bis 350°F).

**7.** Verfahren nach Anspruch 5, bei welchem ein Blechteil aus einer Aluminiumlegierung zu einem Konstruktionsteil einer unteren Tragflächenhaut gefertigt wird, welches Verfahren einschließt: Umformen des Blechteils für das Tragflügel-Konstruktionsteil und daran Befestigen von langgestreckten versteifenden Elementen und bei welchem das Blechteil und die versteifenden Elemente Aluminiumlegierungen aufweisen, wobei jede dieser Legierungen nach Anspruch 5 festgelegt ist.

**8.** Verfahren nach Anspruch 5 zum Herstellen von Tragflächen-Konstruktionsteilen für ein kommerzielles Flugzeug, wobei das Teil der oberen Tragflächenhaut und eine davon beabstandete Tragflächenhaut so angeordnet sind, dass sie dem Tragflächenteil eine innere Festigkeit vermitteln, und wobei mindestens dass Teil der unteren Tragflächenhaut über daran angebrachte langgestreckte versteifende Elemente verfügt, wobei das Metall für das Teil der unteren Tragflächenhaut bereitgestellt wird als ein Aluminiumknetlegierung-Walzblechprodukt, aufweisend eine Aluminiumlegierung nach Anspruch 5, und wobei das Metall für die langgestreckten versteifenden Elemente bereitgestellt wird als ein Walzprodukt aus Knetaluminium, aufweisend eine Legierung nach Anspruch 5.

**9.** Verfahren nach Anspruch 5 zum Herstellen eines Walzbleches für ein Konstruktionsteil eines Tragflächenholmes für einen kommerziellen Jet, umfassend das Bereitstellen des Walzenballens einer Legierung nach Anspruch 5;
Homogenisieren der Legierung durch Erhitzen von 399° bis 477°C (750 bis 890°F) und weiteres Erhitzen von 410° bis 488°C (770° bis 910°F);
Warmwalzen der Legierung bei einer Temperatur oberhalb von 399°C (750°F);
Behandeln durch Lösungsglühen der Legierung bei einer Temperatur von mindestens 471°C (880°F);
Abschrecken der Legierung;
Aushärten bei erhöhter Temperatur der Legierung durch Erhitzen von 79° bis 143°C (175° bis 290°F) und Erhitzen von 149° bis 177°C (300° bis 350°F).

**10.** Verfahren nach Anspruch 5, bei welchem ein dickes Blechteil aus Aluminiumlegierung zu einem Konstruktionsteil für einen Tragflächenholm gefertigt wird, welches Verfahren das Umformen des Blechteils zu einer Form für das Konstruktionsteil des Tragflächenholms einschließt, wobei das Blechteil eine Aluminiumlegierung nach Anspruch 5 aufweist.

**11.** Verfahren nach Anspruch 6, bei welchem ein warmgewalztes Blech erzeugt wird, wobei das Blech vor oder nach einer etwaigen Umformung nach der Aushärtung bei erhöhter Temperatur über eine L-Fließgrenze von mindestens 469MPa (68ksi), eine LT-Fließgrenze von mindestens 462MPa (67ksi) und eine L-T-Bruchzähigkeit $K_{Ic}$ bei Raumtemperatur von mindestens 37,4Mpa $\sqrt{m}$ (34 ksi$\sqrt{in}$) und eine -53,9°C (minus 65°F) L-T-Bruchzähigkeit $K_{Ic}$ von mindestens 31,9MPa $\sqrt{m}$ (29 ksi$\sqrt{in}$) verfügt.

**12.** Verfahren nach Anspruch 7, bei welchem das Blech vor oder nach einem etwaigen Umformen nach der Aushärtung bei erhöhter Temperatur über eine L-Fließgrenze von mindestens 490MPa (71ksi), eine LT-Fließgrenze von mindestens 483MPa (70ksi), eine L-T-Bruchzähigkeit $K_{Ic}$ bei Raumtemperatur von mindestens 46,2MPa $\sqrt{m}$ (42 ksi$\sqrt{in}$) und eine -53,9°C (minus 65°F) L-T-Bruchzähigkeit $K_{Ic}$ von mindestens 40,7MPa $\sqrt{m}$ (37 ksi$\sqrt{in}$) verfügt.

**13.** Verfahren nach Anspruch 8, bei welchem das Walzblechprodukt vor oder nach einem etwaigen Umformen nach der Aushärtung bei erhöhter Temperatur über eine L-Fließgrenze von mindestens 462MPa (67ksi), eine LT-Fließgrenze von mindestens 455MPa (66ksi), eine L-T-Bruchzähigkeit $K_{Ic}$ bei Raumtemperatur von mindestens 42,9MPa $\sqrt{m}$ (39 ksi$\sqrt{in}$) und eine -53,9°C (minus 65°F) L-T-Bruchzähigkeit $K_{Ic}$ von mindestens 37,4MPa $\sqrt{m}$ (34 ksi$\sqrt{in}$) verfügt.

**14.** Verfahren nach Anspruch 9, bei welchem das Blech mindestens eine Dicke von 76mm (3inch) hat und vor oder nach einem etwaigen Umformen nach der Aushärtung bei erhöhter Temperatur über eine L-Fließgrenze von mindestens 441MPa (64 ksi), eine LT-Fließgrenze von mindestens 434MPa (63ksi), eine L-T-Bruchzähigkeit $K_{Ic}$ bei Raumtemperatur von mindestens 28,6MPa $\sqrt{m}$ (26 ksi$\sqrt{in}$) und eine -53,9°C (minus 65°F) L-T-Bruchzähigkeit $K_{Ic}$ von mindestens 23,1MPa $\sqrt{m}$ (21 ksi$\sqrt{in}$) verfügt.

**15.** Verfahren nach Anspruch 9, bei welchem das Blech mindestens eine Dicke von 76mm (3inch) hat und vor oder nach einem etwaigen Umformen nach der Aushärtung bei erhöhter Temperatur über eine L-Fließgrenze von mindestens 414MPa (60 ksi), eine LT-Fließgrenze von mindestens 407MPa (59ksi), eine L-T-Bruchzähigkeit $K_{Ic}$ bei

Raumtemperatur von mindestens 25,3MPa √m (23 ksi√in) und eine -53,9°C (minus 65°F) L-T-Bruchzähigkeit $K_{Ic}$ von mindestens 19,8MPa √m (18 ksi√in) verfügt.

16. Verfahren nach Anspruch 9, welches Verfahren eine Aushärtung bei erhöhter Temperatur von 79° bis 143°C (175° bis 290°F) nach dem Erhitzen von 149° bis 177°C (300° bis 400°F) einschließt.

17. Verfahren nach Anspruch 10, bei welchem das Blech mindestens eine Dicke von 64mm (2,5inch) hat und vor oder nach einem etwaigen Umformen nach der Aushärtung bei erhöhter Temperatur über eine L-Fließgrenze von mindestens 469MPa (68 ksi), eine LT-Fließgrenze von mindestens 462MPa (67ksi), eine L-T-Bruchzähigkeit $K_{Ic}$ bei Raumtemperatur von mindestens 37,4MPa √m (34 ksi√in) und eine -53,9°C (minus 65°F) L-T-Bruchzähigkeit $K_{Ic}$ von mindestens 31,9MPa √m (29 ksii√n) sowie einen SCC-Beständigkeit von mindestens 172MPa (25 ksi) verfügt.

18. Verfahren nach Anspruch 7, bei welchem das Blech vor oder nach einer etwaigen Umformung nach der Aushärtung bei erhöhter Temperatur über eine L-Fließgrenze von mindestens 490MPa (71 ksi), eine LT-Fließgrenze von mindestens 483MPa (70 ksi), eine L-T-Bruchzähigkeit $K_{Ic}$ bei Raumtemperatur von mindestens 42,9MPa √m (39 ksi√in) und eine -53,9°C (minus 65°F) L-T-Bruchzähigkeit $K_{Ic}$ von mindestens 37,4MPa √m (34 ksi√in) sowie einen SCC-Beständigkeit von mindestens 172MPa (25 ksi) verfügt.

19. Verfahren nach Anspruch 7, bei welchem das Blech im gewalzten Zustand eine Dicke von weniger als 64mm (2,5inch) hat und vor oder nach einem etwaigen Umformen nach der Aushärtung bei erhöhter Temperatur über eine L-Bruchfestigkeit von mindestens 538MPa (78 ksi), eine LT-Bruchfestigkeit von mindestens 531MPa (77 ksi), eine L-T-Bruchzähigkeit $K_{Ic}$ bei Raumtemperatur von mindestens 46,2MPa √m (42 ksi√in), eine L-T-Bruchzähigkeit $K_{Ic}$ bei -53,9°C (minus 65°F) von mindestens 40,7MPa √m (37 ksi√in), eine T-L-Bruchzähigkeit $K_{Ic}$ bei Raumtemperatur von mindestens 36,3MPa √m (33 ksi√in) und eine T-L-Bruchzähigkeit $K_{Ic}$ bei -53,9°C (minus 65°F) von mindestens 33MPa √m (30 ksi√in) verfügt.

20. Verfahren nach Anspruch 7, bei welchem das Blech im gewalzten Zustand eine Dicke von weniger als 64mm (2,5inch) hat und vor oder nach einer etwaigen Umformung und nach der Aushärtung bei erhöhter Temperatur über eine L-Fließgrenze von mindestens 490MPa (71 ksi), eine LT-Fließgrenze von mindestens 483MPa (70 ksi), eine L-T-Bruchzähigkeit $K_{Ic}$ bei Raumtemperatur von mindestens 42,9MPa √m (39 ksi√in), eine L-T-Bruchzähigkeit $K_{Ic}$ bei -53,9°C (minus 65°F) von mindestens 37,4MPa √m (34 ksi√in), eine T-L-Bruchzähigkeit $K_{Ic}$ bei Raumtemperatur von mindestens 33MPa √m (30 ksi√in) und eine T-L-Bruchzähigkeit $K_{Ic}$ bei -53,9°C (minus 65°F) von mindestens 29,7MPa √m (27 ksi√in) verfügt.

21. Verfahren nach Anspruch 7, bei welchem das Blech im gewalzten Zustand eine Dicke von weniger als 64mm (2,5inch) hat und vor oder nach einer etwaigen Umformung und nach der Aushärtung bei erhöhter Temperatur über eine L-Fließgrenze von mindestens 462MPa (67 ksi), eine LT-Fließgrenze von mindestens 455MPa (66 ksi), eine L-T-Bruchzähigkeit $K_{Ic}$ bei Raumtemperatur von mindestens 137,5Mpa√m(125 ksi√in), eine L-T-Bruchzähigkeit $K_{Ic}$ bei -53,9°C (minus 65°F) von mindestens 126,5MPa √m (115 ksi√in), eine T-L-Bruchzähigkeit $K_{Ic}$ bei Raumtemperatur von mindestens 82,5MPa √m (75 ksi√in) und eine T-L-Bruchzähigkeit $K_{Ic}$ bei -53,9°C (minus 65°F) von mindestens 71,5MPa √m (65 ksi√in) verfügt.

22. Verfahren nach Anspruch 10, bei welchem das Blech im gewalzten Zustand eine Dicke von weniger als 64mm (2,5inch) hat und vor oder nach einer etwaigen Umformung und nach der Aushärtung bei erhöhter Temperatur über eine L-Fließfestigkeit von mindestens 469MPa (68 ksi), eine LT-Fließfestigkeit von mindestens 462MPa (67 ksi), eine ST-Fließfestigkeit von mindestens 421 MPa (61 ksi), eine L-T-Bruchzähigkeit $K_{Ic}$ bei Raumtemperatur von mindestens 34,1MPa √m (31 ksi√in), eine L-T-Bruchzähigkeit $K_{Ic}$ bei -53,9°C (minus 65°F) von mindestens 28,6MPa √m (26 ksi√in), eine T-L-Bruchzähigkeit $K_{Ic}$ bei Raumtemperatur von mindestens 26,4MPa √m (24 ksi√in) und eine T-L-Bruchzähigkeit $K_{Ic}$ bei -53,9°C (minus 65°F) von mindestens 23,1MPa √m (21 ksi√in) verfügt.

23. Verfahren nach Anspruch 10, bei welchem das Belch im gewalzten Zustand eine Dicke von weniger als 64mm (2,5inch) hat und vor oder nach einer etwaigen Umformung und nach der Aushärtung bei erhöhter Temperatur über eine L-Bruchfestigkeit von mindestens 476MPa (69 ksi), eine LT-Bruchfestigkeit von mindestens 469MPa (68 ksi), eine ST-Bruchfestigkeit von mindestens 441MPa (64 ksi), eine L-T-Bruchzähigkeit $K_{Ic}$ bei Raumtemperatur von mindestens 37,4MPa √m (34 ksi√in), eine L-T-Bruchzähigkeit $K_{Ic}$ bei -53,9°C (minus 65°F) von mindestens 31,9MPa √m (29 ksi√in), eine T-L-Bruchzähigkeit $K_{Ic}$ bei Raumtemperatur von mindestens 29,7MPa √m (27 ksi√in) und eine T-L-Bruchzähigkeit $K_{Ic}$ bei -53,9°C (minus 65°F) von mindestens 26,4MPa √m (24 ksi√in) verfügt.

**24.** Verfahren nach Anspruch 10, bei welchem das Blech im gewalzten Zustand eine Dicke größer als 102mm (4inch) hat und vor oder nach einem etwaigen Verformen und nach dem Aushärten bei erhöhter Temperatur über eine L-Fließgrenze von mindestens 414MPa (60 ksi), eine LT-Fließgrenze von mindestens 407MPa (59 ksi), eine ST-Fließgrenze von mindestens 372MPa (54 ksi), eine L-T-Bruchzähigkeit $K_{Ic}$ bei Raumtemperatur von mindestens 25,3MPa √m (23 ksi√in), eine L-T-Bruchzähigkeit $K_{Ic}$ bei -53,9°C (minus 65°F) von mindestens 19,8MPa √m (18 ksi√in), eine T-L-Bruchzähigkeit $K_{Ic}$ bei Raumtemperatur von mindestens 18,7MPa √m (17 ksi√in) und eine T-L-Bruchzähigkeit $K_{Ic}$ bei -53,9°C (minus 65°F) von mindestens 15,4MPa √m (14 ksi√in) verfügt.

**25.** Verfahren nach Anspruch 5, umfassend das Bereitstellen eines Walzenballens nach Anspruch 5;
Homogenisieren der Legierung durch Erhitzen von 399° bis 477°C (750 bis 890°F) und weiteres Erhitzen von 410° bis 488°C (770° bis 910°F);
Warmumformen der Legierung;
Behandeln durch Lösungsglühen der Legierung bei einer Temperatur von mindestens 471°C (880°F);
Abschrecken der Legierung;
Aushärtung bei erhöhter Temperatur der Legierung durch Erhitzen von 79° bis 143°C (175° bis 290°F) und Erhitzen von 149° bis 177°C (300° bis 350°F).

**26.** Verfahren nach Anspruch 25, bei welchem das Warmumformen durch Extrusion erfolgt.

**27.** Verfahren nach Anspruch 25, bei welchem das Warmumformen durch Schmieden erfolgt.

**28.** Verfahren nach Anspruch 5, bei welchem ein Teil einer oberen Tragflächenhaut und beabstandet davon ein Teil einer unteren Tragflächenhaut so angeordnet sind, dass sie dem Tragflächenteil beim Zusammenwirken eine innere Festigkeit vermitteln, und bei welchem die oberen und unteren Teile der Tragflächenhaut durch ein Holmteil aus gewalztem Aluminiumblech überbrückt sind, wobei das Metall des Walzblechproduktes als eine Aluminiumlegierung nach Anspruch 5 bereitgestellt wird.

**29.** Verfahren nach Anspruch 28, bei welchem das Blech in gewalztem Zustand eine Dicke von mindestens 64mm (2,5inch) hat und vor oder nach einer etwaigen Umformung und nach der Aushärtung bei erhöhter Temperatur über eine L-Fließgrenze von mindestens 469MPa (68 ksi), eine LT-Fließgrenze von mindestens 462MPa (67 ksi), eine L-T-Bruchzähigkeit $K_{Ic}$ bei Raumtemperatur von mindestens 34,1MPa √m (31 ksi√in) und eine L-T-Bruchzähigkeit $K_{Ic}$ bei -53,9°C (minus 65°F) von mindestens 28,6MPa √m (26 ksi√in) verfügt.

**30.** Verfahren nach Anspruch 28, bei welchem das Blech in gewalztem Zustand eine Dicke von mindestens 64mm (2,5inch) hat und vor oder nach einer etwaigen Umformung und nach der Aushärtung bei erhöhter Temperatur über eine L-Bruchfestigkeit von mindestens 476MPa (69 ksi), eine LT-Bruchfestigkeit von mindestens 469MPa (68 ksi), eine ST-Bruchfestigkeit von mindestens 414MPa (60 ksi), eine L-T-Bruchzähigkeit $K_{Ic}$ bei Raumtemperatur von mindestens 37,4MPa √m (34 ksi√in), eine L-T-Bruchzähigkeit $K_{Ic}$ bei -53,9°C (minus 65°F) von mindestens 31,9MPa √m (29 ksi√in), eine T-L-Bruchzähigkeit $K_{Ic}$ bei Raumtemperatur von mindestens 29,7MPa √m (27 ksi√in) und eine T-L-Bruchzähigkeit $K_{Ic}$ bei -53,9°C (minus 65°F) von mindestens 26,4MPa √m (24 ksi√in) verfügt.

**31.** Verfahren nach Anspruch 28, bei welchem das Blech im gewalzten Zustand eine Dicke von mehr als 102mm (4inch) hat und vor oder nach einer etwaigen Umformung und nach der Aushärtung bei erhöhter Temperatur über eine L-Fließgrenze von mindestens 428MPa (62 ksi), eine LT-Fließgrenze von mindestens 421MPa (61 ksi), eine ST-Fließgrenze von mindestens 372 MPa (54 ksi), eine L-T-Bruchzähigkeit $K_{Ic}$ bei Raumtemperatur von mindestens 25,3MPa √m (23 ksi√in), eine L-T-Bruchzähigkeit $K_{Ic}$ bei -53,9°C (minus 65°F) von mindestens 19,8MPa √m (18 ksi√in), eine T-L-Bruchzähigkeit $K_{Ic}$ bei Raumtemperatur von mindestens 18,7MPa √m (17 ksi√in) und eine T-L-Bruchzähigkeit $K_{Ic}$ bei -53,9°C (minus 65°F) von mindestens 15,4MPa √m (14 ksi√in) verfügt.

**32.** Verfahren nach Anspruch 5, umfassend das Bereitstellen eines Walzenballens der Legierung nach Anspruch 5;
Homogenisieren der Legierung;
Warmwalzen der Legierung zu einem Blech;
Behandeln durch Lösungsglühen der Legierung;
Abschrecken der Legierung;
wobei das Blech weitgehend nicht rekristallisiert ist und nach der Aushärtung bei erhöhter Temperatur über eine L-Fließgrenze von mindestens 428MPa (62 ksi), eine LT-Fließgrenze von mindestens 421MPa (61 ksi), eine ST-Fließgrenze von mindestens 37,2MPa (54 ksi), eine L-T-Bruchzähigkeit $K_{Ic}$ bei Raumtemperatur von mindestens 25,3MPa √m (23 ksi√in), eine L-T-Bruchzähigkeit $K_{Ic}$ bei -53,9°C (minus 65°F) von mindestens 19,8MPa √m (18 ksi√in), eine T-L-Bruchzähigkeit $K_{Ic}$ bei Raumtemperatur von mindestens 18,7MPa √m (17 ksi√in) und eine T-L-Bruchzähigkeit $K_{Ic}$ bei -53,9°C (minus 65°F) von mindestens 15,4MPa √m (14 ksi√in) verfügt.

33. Verfahren nach Anspruch 5, bei welchem das Blechteil aus der Aluminiumlegierung zu einem Flugzeug-Konstruktionsteil gefertigt wird, wobei das Verfahren das Verarbeiten des Blechteils zu einer Form für das Konstruktionsteil einschließt, wobei das Blechteil eine Aluminiumlegierung nach Anspruch 5 aufweist, wobei das Blech weitgehend nicht rekristallisiert ist.


**Revendications**

1. Aile d'avion, comprenant un organe mécanique inférieur de revêtement d'aile comprenant un alliage qui est constitué de 5,9 à 6,7 % de zinc, 1,6 à 1,9 % de magnésium, 1,8 à 2,4 % de cuivre, 0,08 à 0,15 % de zirconium, 0,06 % au plus de silicium, 0,06 % au plus de fer, 0,11 % au plus de fer plus silicium, le reste étant formé d'aluminium et des impuretés inévitables.

2. Aile selon la revendication 1, dans laquelle l'organe résistant inférieur de revêtement d'aile est formé d'une plaque d'alliage laminé.

3. Aile selon la revendication 1, dans laquelle l'aile comprend aussi un organe résistant supérieur de revêtement d'aile comprenant un alliage laminé à chaud, traité thermiquement par recuit de mise en solution et vieilli artificiellement, constitué par 7,6 à 8,4 % de zinc, 1,8 à 2,2 % de magnésium, 2,1 à 2,6 % de cuivre et au moins un élément présent en quantité ne dépassant pas 0,5 %, cet élément étant choisi parmi le zirconium, le vanadium et le hafnium, le reste étant formé d'aluminium et des impuretés inévitables.

4. Aile selon la revendication 3, dans laquelle les organes résistants supérieur et inférieur de revêtement d'aile sont raccordés par un ou plusieurs longerons usinés dans la plaque laminée d'un alliage tel que défini dans la revendication 1.

5. Procédé de production d'organes résistants inférieurs de revêtement d'aile pour aéronef commercial à réaction, comprenant la formation de l'organe à partir d'un alliage constitué de 5,9 à 6,7 % de zinc, 1,6 à 1,9 % de magnésium, 1,8 à 2,4 % de cuivre, 0,08 à 0,15 % de zirconium, 0,06 % au maximum de silicium, 0,06 % au maximum de fer, 0,11 % au maximum de fer plus silicium, le reste étant formé d'aluminium et d'impuretés inévitables.

6. Procédé selon la revendication 5, qui comprend la production d'un organe résistant inférieur de revêtement d'aile par réalisation d'un corps d'alliage tel que défini dans la revendication 5,
homogénéisation de l'alliage par chauffage entre 399 et 477 °C (750 et 890 °F) et chauffage supplémentaire entre 410 et 488 °C (770 et 910 °F),
laminage à chaud de l'alliage à une température supérieure à 399 °C (750 °F),
traitement thermique de recuit de mise en solution de l'alliage à une température d'au moins 471 °C (880 °F),
trempe de l'alliage,
étirage de l'alliage d'au moins 1 % environ,
vieillissement artificiel de l'alliage par chauffage de 79 °C à 143 °C (175 à 290 °F) et chauffage de 149 °C à 177 °C (300 à 350 °F).

7. Procédé selon la revendication 5, dans lequel un organe sous forme d'une plaque d'alliage d'aluminium est mis sous forme d'un organe résistant inférieur de revêtement d'aile, le procédé comprenant la mise de l'organe en forme de plaque à la configuration de l'organe résistant d'aile et la fixation à celui-ci de raidisseurs allongés, et dans lequel l'organe en forme de plaque et les raidisseurs sont formés d'alliage d'aluminium, chaque alliage étant tel que défini dans la revendication 5.

8. Procédé selon la revendication 5 de fabrication d'organe résistant d'aile pour aéronef commercial, dans lequel un organe supérieur de revêtement d'aile et un organe inférieur distant de revêtement d'aile sont destinés à coopérer en donnant de la résistance mécanique à l'aile, et au moins l'organe inférieur de revêtement d'aile porte des raidisseurs allongés qui lui sont fixés, le métal de l'organe inférieur de revêtement d'aile est sous forme d'un produit de plaque laminée et forgée d'aluminium comprenant un alliage d'aluminium tel que défini dans la revendication 5, et dans lequel le métal des raidisseurs allongés est sous forme d'un produit laminé forgé d'aluminium comprenant un alliage tel que défini dans la revendication 5.

9.  Procédé selon la revendication 5 de production d'une plaque laminée pour organe résistant de longeron d'aile pour aéronef commercial à réaction, comprenant la disposition d'un corps d'alliage tel que défini dans la revendication 5,

    l'homogénéisation de l'alliage par chauffage de 399 à 477 °C (750 à 890 °F) et chauffage supplémentaire de 410 à 488 °C (770 à 910 °F),

    le laminage à chaud de l'alliage à une température supérieure à 399 °C (750 °F),

    le traitement thermique de recuit de mise en solution de l'alliage à une température d'au moins 471 °C (880 °F),

    la trempe de l'alliage, et

    le vieillissement artificiel de l'alliage par chauffage de 79 à 143 °C (175 à 290 °F) et chauffage de 149 à 177 °C (300 à 400 °F).

10. Procédé selon la revendication 5, dans lequel un organe épais d'une plaque d'alliage d'aluminium est mis sous forme d'un organe résistant de longeron d'aile, le procédé comprenant la mise de l'organe en forme de plaque à une configuration convenant à un longeron résistant d'aile, et l'organe en forme de plaque comporte un alliage d'aluminium selon la revendication 5.

11. Procédé selon la revendication 6, qui produit une plaque laminée à chaud, dans lequel la plaque, avant ou après toute mise en forme, possède, après vieillissement artificiel, un module d'élasticité L d'au moins 469 MPa (68 ksi), un module d'élasticité LD d'au moins 462 MPa (67 ksi), une ténacité à la fracture L-T $K_{Ic}$ à température ambiante d'au moins 37,4.MPa.m$^{1/2}$ (34 ksi.pouce$^{1/2}$) et une ténacité à la fracture $K_{Ic}$ à -53,9 °C (-65 °F) d'au moins 31,9 MPa.m$^{1/2}$ (29 ksi.pouce$^{1/2}$).

12. Procédé selon la revendication 7, dans lequel la plaque, avant ou après toute mise en forme, possède, après vieillissement artificiel, une limite élastique L d'au moins 490 MPa (71 ksi), un module d'élasticité LT d'au moins 483 MPa (70 ksi) et une ténacité à la fracture L-T $K_{Ic}$ à température ambiante d'au moins 46,2 MPa.m$^{1/2}$ (42 ksi. pouce$^{1/2}$) et une ténacité à la fracture L-T à -53,9 °C (-65 °F) $K_{Ic}$ d'au moins 40,7 MPa.m$^{1/2}$ (37 ksi.pouce$^{1/2}$).

13. Procédé selon la revendication 8, dans lequel la plaque, avant ou après toute mise en forme, possède, après vieillissement artificiel, une limite élastique L d'au moins 462 MPa (67 ksi), un module d'élasticité LT d'au moins 455 MPa (66 ksi) et une ténacité à la fracture L-T $K_{Ic}$ à température ambiante d'au moins 42,9 MPa.m$^{1/2}$ (39 ksi. pouce$^{1/2}$) et une ténacité à la fracture L-T à -53,9 °C (-65 °F) $K_{Ic}$ d'au moins 37,4 MPa.m$^{1/2}$ (34 ksi.pouce$^{1/2}$).

14. Procédé selon la revendication 9, dans lequel la plaque a une épaisseur d'au moins 76 mm (3 pouces) et, avant ou après toute mise en forme, possède, après vieillissement artificiel, une limite élastique L d'au moins 441 MPa (64 ksi), un module d'élasticité LT d'au moins 433 MPa (63 ksi) et une ténacité à la fracture L-T $K_{Ic}$ à température ambiante d'au moins 28,6 MPa.m$^{1/2}$ (26 ksi.pouce$^{1/2}$) et une ténacité à la fracture L-T à -53,9 °c (-65 °F) $K_{Ic}$ d'au moins 23,1 MPa.m$^{1/2}$ (21 ksi.pouce$^{1/2}$).

15. Procédé selon la revendication 9, dans lequel la plaque a une épaisseur d'au moins 76 mm (3 pouces) et, avant ou après toute mise en forme, possède, après vieillissement artificiel, une limite élastique L d'au moins 414 MPa (60 ksi), un module d'élasticité LT d'au moins 407 MPa (59 ksi) et une ténacité à la fracture L-T $K_{Ic}$ à température ambiante d'au moins 25,3 MPa.m$^{1/2}$ (23 ksi.pouce$^{1/2}$) et une ténacité à la fracture L-T à -53,9 °C (-65 °F) $K_{Ic}$ d'au moins 19,8 MPa.m$^{1/2}$ (18 ksi.pouce$^{1/2}$).

16. Procédé selon la revendication 9, qui comprend un chauffage supplémentaire de vieillissement artificiel de 79 à 143 °C (175 à 290 °F) après chauffage de 149 à 177 °C (300 à 400 °F).

17. Procédé selon la revendication 10, dans lequel la plaque a une épaisseur d'au moins 64 mm (2,5 pouces) et, avant ou après toute mise en forme, après vieillissement artificiel, possède une limite élastique L d'au moins 469 MPa (68 ksi), un module d'élasticité LT d'au moins 462 MPa (67 ksi) et une ténacité à la fracture L-T $K_{Ic}$ à température ambiante d'au moins 37,4 MPa.m$^{1/2}$ (34 ksi.pouce$^{1/2}$), une ténacité à la fracture L-T à -53,9 C (-65 °F) $K_{Ic}$ d'au moins 31,9 MPa.m$^{1/2}$ (29 ksi.pouce$^{1/2}$), et une résistance SCC d'au moins 172 MPa (25 ksi).

18. Procédé selon la revendication 7, dans lequel la plaque, avant ou après toute mise en forme, après vieillissement artificiel, possède une limite élastique L d'au moins 490 MPa (71 ksi), un module d'élasticité LT d'au moins 483 MPa (70 ksi) et une ténacité à la fracture L-T $K_{Ic}$ à température ambiante d'au moins 42,9 MPa.m$^{1/2}$ (39 ksi. pouce$^{1/2}$), une ténacité à la fracture L-T à -53,9 °C (-65 °F) $K_{Ic}$ d'au moins 37,4 MPa.m$^{1/2}$ (34 ksi.pouce$^{1/2}$), et une résistance SCC d'au moins 172 MPa (25 ksi).

**19.** Procédé selon la revendication 7, dans lequel la plaque laminée a une épaisseur inférieure à 64 mm (2,5 pouces) et, avant ou après toute mise en forme, après vieillissement artificiel, possède une limite élastique L d'au moins 538 MPa (78 ksi), un module d'élasticité LT d'au moins 531 MPa (77 ksi), une ténacité à la fracture L-T $K_{Ic}$ à température ambiante d'au moins 46,2 MPa.m$^{1/2}$ (42 ksi.pouce$^{1/2}$), une ténacité à la fracture L-T à -53,9 °C (-65 °F) $K_{Ic}$ d'au moins 40,7 NPa.m$^{1/2}$ (37 ksi.pouce$^{1/2}$), une ténacité à la fracture T-L $K_{Ic}$ à température ambiante d'au moins 36,3 MPa.m$^{1/2}$ (33 ksi.pouce$^{1/2}$), une ténacité à la fracture T-L à -53,9 °C (-65 °F) $K_{Ic}$ d'au moins 33 MPa.m$^{1/2}$ (30 ksi.pouce$^{1/2}$).

**20.** Procédé selon la revendication 7, dans lequel la plaque laminée a une épaisseur inférieure à 64 mm (2,5 pouces) et, avant ou après toute mise en forme, après vieillissement artificiel, possède une limite élastique L d'au moins 490 MPa (71 ksi), un module d'élasticité LT d'au moins 483 MPa (70 ksi), une ténacité à la fracture L-T $K_{Ic}$ à température ambiante d'au moins 42,9 MPa.m$^{1/2}$ (39 ksi.pouce$^{1/2}$), une ténacité à la fracture L-T à -53,9 °C (-65 °F) $K_{Ic}$ d'au moins 37,4 MPa.m$^{1/2}$ (34 ksi.pouce$^{1/2}$), une ténacité à la fracture T-L $K_{Ic}$ à température ambiante d'au moins 33 MPa.m$^{1/2}$ (30 ksi.pouce$^{1/2}$), une ténacité à la fracture T-L à -53,9 °C (-65 °F) $K_{Ic}$ d'au moins 29,7 MPa.m$^{1/2}$ (27 ksi.pouce$^{1/2}$).

**21.** Procédé selon la revendication 7, dans lequel la plaque laminée a une épaisseur inférieure à 64 mm (2,5 pouces) et, avant ou après toute mise en forme, après vieillissement artificiel, possède une limite élastique L d'au moins 462 MPa (67 ksi), un module d'élasticité LT d'au moins 455 MPa (66 ksi), une ténacité à la fracture L-T $K_{Ic}$ à température ambiante d'au moins 137,5 NPa.m$^{1/2}$ (125 ksi.pouce$^{1/2}$), une ténacité à la fracture L-T à -53,9 °C (-65 °F) $K_{Ic}$ d'au moins 126,5 MPa.m$^{1/2}$ (115 ksi.pouce$^{1/2}$), une ténacité à la fracture T-L $K_{Ic}$ à température ambiante d'au moins 82,5 MPa.m$^{1/2}$ (75 ksi.pouce$^{1/2}$), une ténacité à la fracture T-L à -53,9 °C (-65 °F) $K_{Ic}$ d'au moins 71,5 MPa.m$^{1/2}$ (65 ksi.pouce$^{1/2}$).

**22.** Procédé selon la revendication 10, dans lequel la plaque laminée a une épaisseur inférieure à 64 mm (2,5 pouces) et, avant ou après toute mise en forme, après vieillissement artificiel, possède une limite élastique L d'au moins 469 MPa (68 ksi), un module d'élasticité ST d'au moins 421 MPa (61 ksi), une ténacité à la fracture L-T $K_{Ic}$ à température ambiante d'au moins 34,1 NPa.m$^{1/2}$ (31 ksi.pouce$^{1/2}$), une ténacité à la fracture L-T à -53,9 °C (-65 °F) $K_{Ic}$ d'au moins 28,6 NPa.m$^{1/2}$ (26 ksi.pouce$^{1/2}$), une ténacité à la fracture T-L $K_{Ic}$ à température ambiante d'au moins 26,4 NPa.m$^{1/2}$ (24 ksi.pouce$^{1/2}$), une ténacité à la fracture T-L à -53,9 °C (-65 °F) $K_{Ic}$ d'au moins 23,1 MPa.m$^{1/2}$ (21 ksi.pouce$^{1/2}$).

**23.** Procédé selon la revendication 10, dans lequel la plaque laminée a une épaisseur inférieure à 64 mm (2,5 pouces) et, avant ou après toute mise en forme, après vieillissement artificiel, possède une résistance à la rupture L d'au moins 476 MPa (69 ksi), une résistance à la rupture LT d'au moins 469 MPa (68 ksi), une résistance à la rupture ST d'au moins 441 MPa (64 ksi), une ténacité à la fracture L-T $K_{Ic}$ à température ambiante d'au moins 37,4 MPa.m$^{1/2}$ (34 ksi.pouce$^{1/2}$), une ténacité à la fracture L-T à -53,9 °C (-65 °F) $K_{Ic}$ d'au moins 31,9 MPa.m$^{1/2}$ (29 ksi.pouce$^{1/2}$), une ténacité à la fracture T-L $K_{Ic}$ à température ambiante d'au moins 29,7 MPa.m$^{1/2}$ (27 ksi.pouce$^{1/2}$), une ténacité à la fracture T-L à -53,9 °C (-65 °F) $K_{Ic}$ d'au moins 26,4 MPa.m$^{1/2}$ (24 ksi.pouce$^{1/2}$).

**24.** Procédé selon la revendication 10, dans lequel la plaque laminée a une épaisseur supérieure à 102 mm (4 pouces) et, avant ou après toute mise en forme, après vieillissement artificiel, possède une limite élastique L d'au moins 414 MPa (60 ksi), un module d'élasticité LT d'au moins 407 MPa (59 ksi), un module d'élasticité ST d'au moins 372 MPa (54 ksi), une ténacité à la fracture L-T $K_{Ic}$ à température ambiante d'au moins 25,3 MPa.m$^{1/2}$ (23 ksi.pouce$^{1/2}$), une ténacité à la fracture L-T à -53,9 °C (-65 °F) $K_{Ic}$ d'au moins 19,8 MPa.m$^{1/2}$ (18 ksi.pouce$^{1/2}$), une ténacité à la fracture T-L $K_{Ic}$ à température ambiante d'au moins 18,7 MPa.m$^{1/2}$ (17 ksi.pouce$^{1/2}$), une ténacité à la fracture T-L à -53,9 °C (-65 °F) $K_{Ic}$ d'au moins 15,4 MPa.m$^{1/2}$ (14 ksi.pouce$^{1/2}$).

**25.** Procédé selon la revendication 5, comprenant la disposition d'un corps d'alliage tel que défini dans la revendication 5,

l'homogénéisation de l'alliage par chauffage de 399 à 477 °C (750 à 890 °F) et chauffage supplémentaire de 410 à 488 °C (770 à 910 °F),

le travail à chaud de l'alliage,

le traitement thermique de recuit de mise en solution de l'alliage à une température d'au moins 471 °C (880 °F),

la trempe de l'alliage, et

le vieillissement artificiel de l'alliage par chauffage de 79 à 143 °C (175 à 290 °F) et chauffage de 149 à 177 °C (300 à 350 °F).

26. Procédé selon la revendication 25, dans lequel le travail à chaud est l'extrusion.

27. Procédé selon la revendication 25, dans lequel le travail à chaud est le forgeage.

28. Procédé selon la revendication 5, dans lequel un organe supérieur de revêtement d'aile et un organe inférieur de revêtement d'aile distant sont destinés à coopérer pour donner de la résistance mécanique à l'organe d'aile, et les organes supérieur et inférieur de revêtement d'aile sont reliés par un longeron formé à partir d'une plaque d'aluminium laminé, et le métal du produit de plaque laminé est sous forme d'un alliage d'aluminium selon la revendication 5.

29. Procédé selon la revendication 28, dans lequel la plaque laminée a une épaisseur inférieure à 64 mm (2,5 pouces) et, avant ou après toute mise en forme, après vieillissement artificiel, possède une limite élastique L d'au moins 469 MPa (68 ksi), un module d'élasticité LT d'au moins 462 MPa (67 ksi), une ténacité à la fracture L-T $K_{Ic}$ à température ambiante d'au moins 34,1 MPa.m$^{1/2}$ (31 ksi.pouce$^{1/2}$), et une ténacité à la fracture L-T à -53,9 °C (-65 °F) $K_{Ic}$ d'au moins 28,6 MPa.m$^{1/2}$ (26 ksi.pouce$^{1/2}$).

30. Procédé selon la revendication 28, dans lequel la plaque laminée a une épaisseur inférieure à 64 mm (2,5 pouces) et, avant ou après toute mise en forme, après vieillissement artificiel, possède une résistance à la rupture L d'au moins 476 MPa (69 ksi), une résistance à la rupture LT d'au moins 469 MPa (68 ksi), une résistance à la rupture ST d'au moins 441 MPa (64 ksi), une ténacité à la fracture L-T $K_{Ic}$ à température ambiante d'au moins 37,4 MPa. m$^{1/2}$ (34 ksi.pouce$^{1/2}$), une ténacité à la fracture L-T à -53,9 °C (-65 °F) $K_{Ic}$ d'au moins 31,9 MPa.m$^{1/2}$ (29 ksi. pouce$^{1/2}$), une ténacité à la fracture T-L $K_{Ic}$ à température ambiante d'au moins 29,7 MPa.m$^{1/2}$ (27 ksi.pouce$^{1/2}$), une ténacité à la fracture T-L à -53,9 °C (-65 °F) $K_{Ic}$ d'au moins 26,4 MPa.m$^{1/2}$ (24 ksi.pouce$^{1/2}$).

31. Procédé selon la revendication 28, dans lequel la plaque laminée a une épaisseur supérieure à 102 mm (4 pouces) et, avant ou après toute mise en forme, après vieillissement artificiel, possède une limite élastique L d'au moins 428 MPa (62 ksi), un module d'élasticité LT d'au moins 421 MPa (61 ksi), un module d'élasticité ST d'au moins 372 MPa (54 ksi), une ténacité à la fracture L-T $K_{Ic}$ à température ambiante d'au moins 25,3 MPa.m$^{1/2}$ (23 ksi. pouce$^{1/2}$), une ténacité à la fracture L-T à -53,9 °C (-65 °F) $K_{Ic}$ d'au moins 19,8 MPa.m$^{1/2}$ (18 ksi.pouce$^{1/2}$), une ténacité à la fracture T-L $K_{Ic}$ à température ambiante d'au moins 18,7 MPa.m$^{1/2}$ (17 ksi.pouce$^{1/2}$), et une ténacité à la fracture T-L à -53,9 °C (-65 °F) $K_{Ic}$ d'au moins 15,4 MPa.m$^{1/2}$ (14 ksi.pouce$^{1/2}$).

32. Procédé selon la revendication 5, qui comprend la mise à disposition d'un corps d'alliage tel que défini dans la revendication 5,

l'homogénéisation de l'alliage,
le laminage à chaud de l'alliage sous forme d'une plaque,
le traitement thermique de recuit de mise en solution de l'alliage,
la trempe de l'alliage,
la plaque n'étant pratiquement pas recristallisé et possédant une limite élastique L d'au moins 428 MPa (62 ksi), un module d'élasticité LT d'au moins 421 MPa (61 ksi), un module d'élasticité ST d'au moins 37,2 MPa (54 ksi), une ténacité à la fracture L-T $K_{Ic}$ à température ambiante d'au moins 25,3 MPa.m$^{1/2}$ (23 ksi.pouce$^{1/2}$), une ténacité à la fracture L-T à -53,9 C (-65 °F) $K_{Ic}$ d'au moins 19,8 MPa.m$^{1/2}$ (18 ksi.pouce$^{1/2}$), une ténacité à la fracture T-L $K_{Ic}$ à température ambiante d'au moins 18,7 MPa.m$^{1/2}$ (17 ksi.pouce$^{1/2}$), et une ténacité à la fracture T-L à

-53,9 °C (-65 °F) $K_{Ic}$ d'au moins 15,4 MPa.m$^{1/2}$ (14 ksi.pouce$^{1/2}$).

33. Procédé selon la revendication 5, dans lequel un organe formé d'une plaque d'alliage d'aluminium est mis sous forme d'un organe résistant d'aéronef, le procédé comprenant l'usinage de l'organe en forme de plaque à la configuration de l'organe résistant, et l'organe en forme de plaque comporte un alliage d'aluminium selon la revendication 5, la plaque n'étant pratiquement pas recristallisée.

F I G. 1

F I G. 2

F I G. 3

AGE FORMING RESPONSE

FIG. 4

S/N FATIGUE COMPARISON

FIG. 5

FATIGUE CRACK GROWTH COMPARISON

FIG. 6

Figure 7